# EUROPÄISCHE PATENTSCHRIFT

(11) **EP 3 172 782 B1**
(45) Veröffentlichungstag und Bekanntmachung des Hinweises auf die Patenterteilung: **23.09.2020**
(21) Anmeldenummer: 15738888.5
(22) Anmeldetag: 14.07.2015
(51) Int. Cl.: H01M 2/10, H01M 2/20, H01M 10/48, C25B 9/04, H01R 9/16

(54) **ZELLKONTAKTIERUNGSSYSTEM FÜR EINE ELEKTROCHEMISCHE VORRICHTUNG UND VERFAHREN ZUM HERSTELLEN EINES ZELLKONTAKTIERUNGSSYSTEMS**
CELL CONTACTING SYSTEM FOR AN ELECTROCHEMICAL DEVICE AND METHOD FOR PRODUCING A CELL CONTACTING SYSTEM
SYSTÈME DE CONTACT DE CELLULES POUR DISPOSITIF ÉLECTROCHIMIQUE ET PROCÉDÉ DE FABRICATION D'UN SYSTÈME DE CONTACT DE CELLULES

(30) Priorität: 21.07.2014 DE 102014110211
(43) Veröffentlichungstag der Anmeldung: 31.05.2017
(73) Patentinhaber: ElringKlinger AG, 72581 Dettingen (DE)
(72) Erfinder: RÖMER, Ruben, 72770 Reutlingen (DE); HÖNLE, Udo, 72108 Rottenburg (DE); KAZMAIER, Stefan, 73230 Kirchheim unter Teck (DE); FRITZ, Wolfgang, 72555 Metzingen (DE)
(74) Vertreter: Hoeger, Stellrecht & Partner Patentanwälte mbB
(86) Internationale Anmeldenummer: PCT/EP2015/066044
(87) Internationale Veröffentlichungsnummer: WO 2016/012303

(56) Entgegenhaltungen:
- EP-A1- 2 849 252
- WO-A1-2014/014000
- WO-A1-2014/103979
- DE-A1-102009 050 315
- DE-A1-102012 205 909

## Beschreibung

Die vorliegende Erfindung betrifft ein Zellkontaktierungssystem für eine elektrochemische Vorrichtung, die mehrere elektrochemische Zellen und ein Stromleitungssystem umfasst, wobei das Zellkontaktierungssystem ein Signalleitungssystem mit einer mehreren Signalleitungen zum elektrisch leitenden Verbinden jeweils einer Signalquelle mit einem Signalleitungsanschluss oder mit einer Überwachungsvorrichtung des Zellkontaktierungssystems und
ein Trägerelement, welches das Signalleitungssystem trägt, umfasst.

Ein solches Zellkontaktierungssystem dient dazu, mittels des Signalleitungssystems eine Einzelzellüberwachung hinsichtlich physikalischer Messgrößen wie beispielsweise der Spannung und der Temperatur zu bewerkstelligen. Hierzu werden beispielsweise Potentialunterschiede zwischen verschiedenen Zellverbindern gemessen und/oder Temperaturen in der Nähe der Zellverbinder mittels geeigneter Temperatursensoren erfasst. Die Signalquellen oder Messstellen sind durch das Signalleitungssystem elektrisch leitend mit dem als Schnittstelle zu einer Überwachungsvorrichtung der elektrochemischen Vorrichtung dienenden Signalleitungsanschluss oder mit einer in die elektrochemische Vorrichtung integrierten Überwachungsvorrichtung verbunden.

Bei bekannten Zellkontaktierungssystemen umfasst das Signalleitungssystem einen Kabelbaum, welcher zum Spannungsabgriff dient und eine elektrische Verbindung von den Zellverbindern zu dem Signalleitungsanschluss bildet. Dieser Kabelbaum ist meist zur besseren Handhabung in einem Kunststoffträger vormontiert. Die Kabelenden sind abisoliert und können mit einer Schweißhilfe umschlossen sein. Diese Kabelenden werden in einer Montageanlage mit dem jeweils zugeordneten Zellverbinder verschweißt, beispielsweise durch ein Ultraschallschweißverfahren. Um einen solchen Schweißvorgang vollautomatisch durchführen zu können, ist es notwendig, dass sich das Kabelende an einer definierten Position relativ zu dem jeweils zugeordneten Zellverbinder befindet, damit gewährleistet ist, dass das Kabelende sich beim Schweißen genau zwischen dem Amboss und der Sonotrode befindet.

Hierbei tritt das Problem auf, dass die Kabelenden eine relative geringe Biegesteifigkeit aufweisen und somit vor dem Schweißvorgang die ideale Schweißposition verlassen, beispielsweise aufgrund von Erschütterungen bei einem Transportvorgang.

Daher ist es bei einer solchen Vorgehensweise notwendig, die Kabelenden während der Montage relativ zu einem Trägerelement des Zellkontaktierungssystems auszurichten, diesen Ausrichtvorgang vor dem Schweißvorgang zu kontrollieren und bei Bedarf zu wiederholen.

Die überstehenden Kabelenden des Kabelbaums können nicht prozesssicher, über den gesamten Zeitraum von Transport, Vormontage und Endmontage hinweg, in der idealen Schweißposition gehalten werden. Die Kabel sind biegeschlaff und daher nicht dazu geeignet, für auf einen Positionsvorgang folgende Verbindungsvorgänge und -prozesse eine vorgegebene Positionstoleranz hinreichend genau einzuhalten. Dies macht Kontroll- und Richtarbeitsvorgänge erforderlich. Hierdurch werden Taktzeiten verlängert, was eine Kostensteigerung zur Folge hat.

Die WO 2014/103979 A1 offenbart ein Zellkontaktierungssystem für eine elektrochemische Vorrichtung, die mehrere elektrochemische Zellen und ein Stromleitungssystem umfasst, wobei das Zellkontaktierungssystem ein Signalleitungssystem mit mehreren Signalleitungen zum elektrisch leitenden Verbinden jeweils einer Signalquelle mit einer Überwachungsvorrichtung des Zellkontaktierungssystems und ein Trägerelement, welches das Signalleitungssystem trägt, umfasst, wobei das Zellkontaktierungssystem ein signalleitungssystemseitiges Positionierelement, das einstückig mit einer Signalleitung des Signalleitungssystems verbunden ist, und ein trägerelementseitiges Positionierelement, das einstückig mit dem Trägerelement verbunden ist, umfasst, wobei das signalleitungssystemseitige Positionierelement so mit dem trägerelementseitigen Positionierelement verrastet ist, dass das signalleitungssystemseitige Positionierelement in einer gewünschten Position relativ zu einem Zellverbinder des Stromleitungssystems positioniert ist.

Die EP 2 849 252 A1 offenbart ein Zellkontaktierungssystem für eine elektrochemische Vorrichtung und ist erst nach dem Prioritätstag der vorliegenden Anmeldung veröffentlicht.

Die WO 2014/014000 A1 offenbart ein Zellkontaktierungssystem für eine elektrochemische Vorrichtung.

Die DE 10 2009 050 315 A1 offenbart eine Verbindungsvorrichtung zum elektrisch leitenden Verbinden mehrerer Zellterminals von elektrochemischen Zellen einer elektrochemischen Vorrichtung, welche mehrere Zellverbinder zum elektrisch leitenden Verbinden jeweils zweier Zellterminals verschiedener elektrochemischer Zellen miteinander umfasst.

Die DE 10 2012 205 909 A1 offenbart ein Zellkontaktierungssystem gemäß dem Oberbegriff von Anspruch 1.

Der vorliegenden Erfindung liegt die Aufgabe zugrunde, ein Zellkontaktierungssystem der eingangs genannten Art zu schaffen, bei welchem eine elektrisch leitende Verbindung zwischen dem Signalleitungssystem und den Zellverbindern und/oder Stromanschlüssen des Stromleitungssystems besonders einfach, zuverlässig und möglichst ohne Kontroll- und Korrekturvorgänge nach einem Positioniervorgang herstellbar ist.

Diese Aufgabe wird durch ein Zellkontaktierungssystem nach Anspruch 1 gelöst.

Der erfindungsgemäßen Lösung liegt das Konzept zugrunde, die elektrisch leitende Verbindung zwischen dem Stromleitungssystem und dem Signalleitungssystem durch ein zusätzliches signalleitungssystemseitiges Positionierelement zu realisieren, welches einerseits an mindestens einer Signalleitung des Signalleitungssystems festgelegt ist und andererseits elektrisch leitend mit einem Zellverbinder oder einem Stromanschluss des Stromleitungssystems verbunden ist.

Das signalleitungssystemseitige Positionierelement kann dabei mit jeweils einem zugeordneten trägerelementseitigen Positionierelement so zusammenwirken, dass das signalleitungssystemseitige Positionierelement durch das trägerelementseitige Positionierelement in einer gewünschten Position relativ zu einem Zellverbinder oder einem Stromanschluss des Stromleitungssystems positioniert ist und in dieser gewünschten Position an dem Zellverbinder oder an dem Stromanschluss festlegbar ist, vorzugsweise stoffschlüssig, insbesondere durch Verschweißung, beispielsweise durch Ultraschallschweißung.

Hierdurch wird die Montage des erfindungsgemäßen Zellkontaktierungssystems erheblich erleichtert.

Das Stromleitungssystem umfasst einen oder mehrere Zellverbinder zum elektrisch leitenden Verbinden von Zellpolen verschiedener elektrochemischer Zellen.

Das Stromleitungssystem ermöglicht das Fließen eines Leistungsstroms von und zu den elektrochemischen Zellen der elektrochemischen Vorrichtung.

Ein Zellverbinder des Stromleitungssystems kann jedes einteilige oder zusammengesetzte, im Betrieb der elektrochemischen Vorrichtung stromführende Element sein, welches die Zellpole verschiedener elektrochemischer Zellen elektrisch leitend miteinander verbindet.

Ein solcher Zellverbinder kann beispielsweise aus elektrisch leitend miteinander verbundenen Zellterminals der elektrochemischen Zellen gebildet sein.

Alternativ hierzu kann auch vorgesehen sein, dass ein solcher Zellverbinder ein zusätzlich zu den Zellterminals der miteinander zu verbindenden elektrochemischen Zellen vorgesehenes Element ist, welches die Zellterminals elektrisch leitend miteinander verbindet.

Erfindungsgemäß wird ein Ende einer Signalleitung an einem zusätzlichen signalleitungssystemseitigen Positionierelement festgelegt, welches vorzugsweise aus einem metallischen Material gebildet ist.

Das signalleitungssystemseitige Positionierelement ist einfach an einem Zellverbinder oder einem Stromanschluss des Stromleitungssystems festlegbar, insbesondere stoffschlüssig, beispielsweise durch Verschweißung, insbesondere durch Ultraschallschweißung.

Durch die Formgebung des signalleitungssystemseitigen Positionierelements ist eine definierte Fügeposition des Positionierelements, in welcher das Positionierelement mit einem Zellverbinder oder einem Stromanschluss gefügt wird, sehr gut einhaltbar.

Das signalleitungssystemseitige Positionierelement kann beispielsweise aus einem Blechmaterial hergestellt sein.

Das signalleitungssystemseitige Positionierelement kann als ein Stanzbiegeteil ausgebildet sein.

Das signalleitungssystemseitige Positionierelement weist vorzugsweise eine hohe Steifigkeit in der X-Richtung und/oder in der Y-Richtung auf.

Ferner weist das signalleitungssystemseitige Positionierelement vorzugsweise eine hohe Flexibilität in der Z-Richtung auf.

Die hohe Flexibilität in der Z-Richtung kann beispielsweise dadurch erreicht werden, dass das signalleitungssystemseitige Positionierelement vorzugsweise eine dünne Wanddicke oder Materialstärke aufweist.

Insbesondere kann vorgesehen sein, dass die Materialstärke des signalleitungssystemseitigen Positionierelements höchstens ungefähr 0,6 mm, insbesondere höchstens ungefähr 0,3 mm, beträgt.

Durch das zumindest in X-Richtung und/oder in Y-Richtung biegesteife signalleitungssystemseitige Positionierelement wird eine deutlich genauere Definition der Fügeposition dieses Positionierelements relativ zu dem jeweils zugeordneten Zellverbinder oder Stromanschluss des Stromleitungssystems erreicht. Hierdurch wird die Toleranzkette bei der Montage des Zellkontaktierungssystems kleiner.

Außerdem wird durch die besser definierten Randbedingungen eine höhere Verbindungsqualität zwischen dem Positionierelement und dem Zellverbinder oder Stromanschluss erreicht, als dies bei einer direkten Verbindung zwischen einem Ende der Signalleitung und dem Zellverbinder oder dem Stromanschluss der Fall wäre.

Zusätzliche Kontroll- und Richtarbeitsgänge während der Montage des Zellkontaktierungssystems werden hierdurch überflüssig.

Das Ende der Signalleitung ist besonders gut verliergesichert, wenn das signalleitungssystemseitige Positionierelement, das an dem Ende der Signalleitung festgelegt ist, durch Verrasten, Verstemmen oder Verklemmen mit dem jeweils zugeordneten trägerelementseitigen Positionierelement verbunden wird.

Das signalleitungssystemseitige Positionierelement kann verschiedene Materialien oder Materialkombinationen umfassen, beispielsweise Kupfer, eine Kupferlegierung oder eine Kupfer-Zink-Legierung.

Das signalleitungssystemseitige Positionierelement kann eine Oberflächenbeschichtung aufweisen oder ohne Oberflächenbeschichtung ausgebildet sein.

Ein mit einer Vernickelung versehenes signalleitungssystemseitiges Positionierelement eignet sich insbesondere zur Verlötung mit dem zugeordneten Zellverbinder oder Stromanschluss.

Ein mit einer Vernickelung versehenes signalleitungssystemseitiges Positionierelement eignet sich insbesondere für eine Verschweißung, insbesondere eine Ultraschallschweißung, mit dem zugeordneten Zellverbinder oder Stromanschluss.

Die elektrisch leitende Verbindung zwischen einem Ende der Signalleitung und dem signalleitungssystemseitigen Positionierelement kann insbesondere durch eine Vercrimpung hergestellt werden.

Insbesondere kann vorgesehen sein, dass das signalleitungssystemseitige Positionierelement ein, zwei oder mehr Crimpelemente zum Vercrimpen der Signalleitung an dem Positionierelement umfasst.

Wenn mehrere Signalleitungen an denselben Zellverbinder oder Stromanschluss angeschlossen werden sollen, so können die mehreren Signalleitungen an dem signalleitungssystemseitigen Positionierelement festgelegt werden und das mehreren Signalleitungen zugeordnete signalleitungssystemseitige Positionierelement elektrisch leitend mit dem betreffenden Zellverbinder oder Stromanschluss verbunden werden.

Dies bietet den Vorteil, dass die Parameter für die Verbindung zwischen dem signalleitungssystemseitigen Positionierelement und dem Zellverbinder oder Stromanschluss von der Anzahl der mit dem signalleitungssystemseitigen Positionierelement verbundenen Signalleitungen unabhängig sind.

Die Festlegung der mehreren Signalleitungen an demselben signalleitungssystemseitigen Positionierelement kann beispielsweise dadurch erfolgen, dass in einen an dem signalleitungssystemseitigen Positionierelement vorgesehen Kabelcrimp die Enden der mehreren Signalleitungen eingelegt werden.

Bei einer bevorzugten Ausgestaltung der Erfindung ist vorgesehen, dass das signalleitungssystemseitige Positionierelement aus einem elektrisch leitfähigen Material gebildet ist, beispielsweise aus Kupfer oder einer Kupferlegierung.

Ferner ist vorzugsweise vorgesehen, dass das signalleitungssystemseitige Positionierelement mit der zugeordneten Signalleitung und mit dem zugeordneten Zellverbinder oder Stromanschluss elektrisch leitend verbunden ist.

Das signalleitungssystemseitige Positionierelement kann durch Stoffschluss oder Formschluss, insbesondere durch Verschweißung, Verlötung, Crimpung, Vernietung und/oder Verschraubung, an dem zugeordneten Zellverbinder oder Stromanschluss festgelegt sein.

Die Verschweißung kann dabei insbesondere eine Ultraschallschweißung, eine Laserschweißung oder eine Widerstandsschweißung sein.

Das signalleitungssystemseitige Positionierelement kann an der zugeordneten Signalleitung durch Verschweißung, Verlötung, Crimpung, Isolationscrimpung und/oder Vernietung festgelegt sein.

Dabei ist unter einer Isolationscrimpung eine Crimpung zu verstehen, bei welcher die gecrimpte Signalleitung im Bereich der Crimpung mit einer Umhüllung aus einem elektrisch isolierenden Material versehen ist.

Die Verschweißung kann beispielsweise eine Ultraschallschweißung, eine Laserschweißung oder eine Widerstandsschweißung sein.

Bei einer bevorzugten Ausgestaltung der Erfindung ist vorgesehen, dass die Signalleitung mehrere Einzelleiter oder Litzen umfasst.

Bei einer besonderen Ausgestaltung der Erfindung ist vorgesehen, dass die dem signalleitungssystemseitigen Positionierelement zugeordnete Signalleitung an einem von dem zugeordneten Zellverbinder oder Stromanschluss beabstandeten Anschlussbereich des signalleitungssystemseitigen Positionierelements festgelegt ist.

Hierdurch ist das Ende der Signalleitung von der Stelle, an welcher das signalleitungssystemseitige Positionierelement mit dem jeweils zugeordneten Zellverbinder oder Stromanschluss elektrisch leitend verbunden, insbesondere verschweißt, wird, entkoppelt.

Das Festlegen des Endes der Signalleitung kann insbesondere durch Crimpung mittels eines an dem signalleitungssystemseitigen Positionierelement vorgesehenen Kabelcrimps erfolgen.

Im Bereich des Kabelcrimps kann die Signalleitung zusätzlich auch stoffschlüssig, beispielsweise durch Verschweißung, insbesondere durch Widerstandsschweißung, mit dem signalleitungssystemseitigen Positionierelement verbunden sein.

Alternativ oder ergänzend hierzu kann vorgesehen sein, dass die dem signalleitungssystemseitigen Positionierelement zugeordnete Signalleitung an einem an dem zugeordneten Zellverbinder oder Stromanschluss anliegenden Kontaktbereich des signalleitungssystemseitigen Positionierelements festgelegt ist.

In diesem Fall wird die Signalleitung durch das signalleitungssystemseitige Positionierelement unterstützt und positionsgenau ausgerichtet.

Das Ende der Signalleitung läuft in diesem Fall bis zu der Stelle, an welcher das trägerelementseitige Positionierelement mit dem zugeordneten Zellverbinder oder Stromanschluss elektrisch leitend verbunden ist.

Das Ende der Signalleitung kann insbesondere durch Crimpung an dem Kontaktbereich des signalleitungssystemseitigen Positionierelements festgelegt sein.

Bei dieser Ausgestaltung des Zellkontaktierungssystems tritt kein zusätzlicher Übergangswiderstand auf.

Ferner kann vorgesehen sein, dass ein vor einem abisolierten Ende der Signalleitung liegender Abschnitt der Signalleitung, der mit einer elektrisch isolierenden Umhüllung versehen ist, durch Isolationscrimpung mittels eines an dem signalleitungssystemseitigen Positionierelement vorgesehenen Iso-Crimps an dem signalleitungssystemseitigen Positionierelement festgelegt ist.

Das trägerelementseitige Positionierelement weist vorzugsweise mehrere Positioniervorsprünge auf, zwischen denen ein Positionierspalt gebildet ist, durch welchen das signalleitungssystemseitige Positionierelement sich hindurcherstreckt.

Das trägerelementseitige Positionierelement ist vorzugsweise aus einem elektrisch isolierenden Material, insbesondere aus einem Kunststoffmaterial, gebildet.

Bei einer bevorzugten Ausgestaltung der Erfindung ist vorgesehen, dass das trägerelementseitige Positionierelement einstückig mit dem Trägerelement ausgebildet ist.

Beispielsweise kann vorgesehen sein, dass das Trägerelement zusammen mit dem trägerelementseitigen Positionierelement in einem Spritzgießverfahren als ein einstückiges Spritzgießteil hergestellt wird.

Alternativ hierzu kann auch vorgesehen sein, dass das trägerelementseitige Positionierelement separat von dem Trägerelement hergestellt und mit diesem, insbesondere durch Stoffschluss und/oder Formschluss, verbunden ist, beispielsweise durch Verschraubung, Vernietung und/oder Verrastung.

Um das signalleitungssystemseitige Positionierelement und damit das an demselben festgelegte Ende der Signalleitung verliersicher an dem Trägerelement zu positionieren, kann vorgesehen sein, dass das signalleitungssystemseitige Positionierelement zumindest zeitweise mit dem trägerelementseitigen Positionierelement durch Verrastung, Verstemmung und/oder Verklemmung verbunden ist.

Die Zellverbinder des Stromleitungssystems sind in einer X-Richtung und/oder in einer Y-Richtung des Zellkontaktierungssystems nebeneinander und im montierten Zustand des Zellkontaktierungssystems in einer Z-Richtung über den Zellterminals der miteinander zu verbindenden elektrochemischen Zellen angeordnet, wobei die X-Richtung, die Y-Richtung und die Z-Richtung paarweise senkrecht zueinander ausgerichtet sind.

Dabei ist es günstig, wenn ein Kontaktbereich des signalleitungssystemseitigen Positionierelements, mit dem das signalleitungssystemseitige Positionierelement an dem zugeordneten Zellverbinder oder Stromanschluss festgelegt ist, längs der Z-Richtung relativ zu dem trägerelementseitigen Positionierelement verschiebbar an dem trägerelementseitigen Positionierelement gehalten ist.

Dabei ist vorzugsweise vorgesehen, dass durch eine Hinterschneidung an dem trägerelementseitigen Positionierelement und/oder an dem signalleitungssystemseitigen Positionierelement verhindert wird, dass sich das signalleitungssystemseitige Positionierelement von dem trägerelementseitigen Positionierelement löst.

Das signalleitungssystemseitige Positionierelement ist somit vorzugsweise zumindest zeitweise, während der Montage des Zellkontaktierungssystems, verliersicher an dem trägerelementseitigen Positionierelement gehalten.

Das signalleitungssystemseitige Positionierelement umfasst einen Kontaktbereich, mit dem das signalleitungssystemseitige Positionierelement an dem zugeordneten Zellverbinder oder Stromanschluss festgelegt ist,
einen Anschlussbereich, mit dem das signalleitungssystemseitige Positionierelement an der zugeordneten Signalleitung festgelegt ist, und einen zwischen dem Kontaktbereich und dem Anschlussbereich angeordneten Verformungsbereich,
wobei der Verformungsbereich derart verformbar ist, dass der Kontaktbereich des signalleitungssystemseitigen Positionierelements relativ zu dem Anschlussbereich längs der Z-Richtung bewegbar ist.

Der Verformungsbereich ist vorzugsweise biegeelastisch in der Z-Richtung ausgebildet.

Der Verformungsbereich kann beispielsweise mindestens eine Welle umfassen.

Das signalleitungssystemseitige Positionierelement und das trägerelementseitige Positionierelement können eine Führungsvorrichtung umfassen, mittels welcher das signalleitungssystemseitige Positionierelement längs der Z-Richtung relativ zu dem trägerelementseitigen Positionierelement verschiebbar an dem trägerelementseitigen Positionierelement geführt ist.

Eine solche Führungsvorrichtung kann ein oder mehrere Führungselemente an dem signalleitungssystemseitigen Positionierelement umfassen.

Ferner kann eine solche Führungsvorrichtung ein oder mehrere Führungsflächen an dem trägerelementseitigen Positionierelement umfassen.

Ferner kann vorgesehen sein, dass das trägerelementseitige Positionierelement an einem Trägerabschnitt des Trägerelements angeordnet ist, wobei der Trägerabschnitt mit einem Grundkörper des Trägerelements derart verbunden ist, dass der Trägerabschnitt mit dem trägerelementseitigen Positionierelement relativ zu dem Grundkörper des Trägerelements längs der Z-Richtung bewegbar ist.

Dabei kann die Bewegung des Trägerabschnitts relativ zu dem Grundkörper auch eine Schwenkbewegung oder eine schräg zur Z-Richtung verlaufende Bewegung sein, solange diese Bewegung eine Komponente längs der Z-Richtung aufweist.

Das Stromleitungssystem ist als ein Bestandteil des Zellkontaktierungssystems ausgebildet und wird von dem Trägerelement des Zellkontaktierungssystems getragen.

Das erfindungsgemäße Zellkontaktierungssystem eignet sich insbesondere zur Verwendung in einer elektrochemischen Vorrichtung, die mehrere elektrochemische Zellen und ein erfindungsgemäßes Zellkontaktierungssystem umfasst.

Die elektrochemische Vorrichtung ist vorzugsweise als ein Akkumulator, beispielsweise ein Lithium-Ionen-Akkumulator, ausgebildet.

Die vorliegende Erfindung betrifft ferner ein Verfahren zum Herstellen eines Zellkontaktierungssystems für eine elektrochemische Vorrichtung, die mehrere elektrochemische Zellen und ein Stromleitungssystem umfasst, wobei das Verfahren Folgendes umfasst:
- Herstellen eines Signalleitungssystems mit einer oder mehreren Signalleitungen zum elektrisch leitenden Verbinden jeweils einer Signalquelle mit einem Signalleitungsanschluss oder einer Überwachungsvorrichtung des Zellkontaktierungssystems;
wobei das Signalleitungssystem im montierten Zustand des Zellkontaktierungssystems von einem Trägerelement des Zellkontaktierungssystems getragen wird.

Der vorliegenden Erfindung liegt die weitere Aufgabe zugrunde, ein solches Verfahren zu schaffen, welches einfach und zuverlässig durchführbar ist und möglichst keine Kontroll- und Korrekturvorgänge nach einem Positioniervorgang erfordert.

Diese Aufgabe wird durch ein Verfahren nach Anspruch 13 gelöst.

Besondere Ausgestaltungen eines solchen Verfahrens sind bereits vorstehend im Zusammenhang mit besonderen Ausgestaltungen des erfindungsgemäßen Zellkontaktierungssystems erläutert worden.

Das trägerelementseitige Positionierelement kann nach dem Festlegen des signalleitungssystemseitigen Positionierelements an dem zugeordneten Zellverbinder oder Stromanschluss mit dem Trägerelement und/oder mit dem signalleitungssystemseitigen Positionierelement verbunden bleiben.

Alternativ hierzu kann auch vorgesehen sein, dass das trägerelementseitige Positionierelement nach dem Festlegen des signalleitungssystemseitigen Positionierelements an dem Zellverbinder oder dem Stromanschluss von dem Trägerelement und/oder von dem signalleitungssystemseitigen Positionierelement gelöst wird.

In diesem Fall kann darauf verzichtet werden, das signalleitungssystemseitige Positionierelement und/oder das trägerelementseitige Positionierelement so auszubilden, dass eine Relativbewegung zwischen einem Kontaktbereich des signalleitungssystemseitigen Positionierelements, welcher an dem zugeordneten Zellverbinder oder Stromanschluss festgelegt ist, und dem Trägerelement längs der Z-Richtung des Zellkontaktierungssystems ermöglicht ist.

Weitere Merkmale und Vorteile der Erfindung sind Gegenstand der nachfolgenden Beschreibung und der zeichnerischen Darstellung von Ausführungsbeispielen.

In den Zeichnungen zeigen:

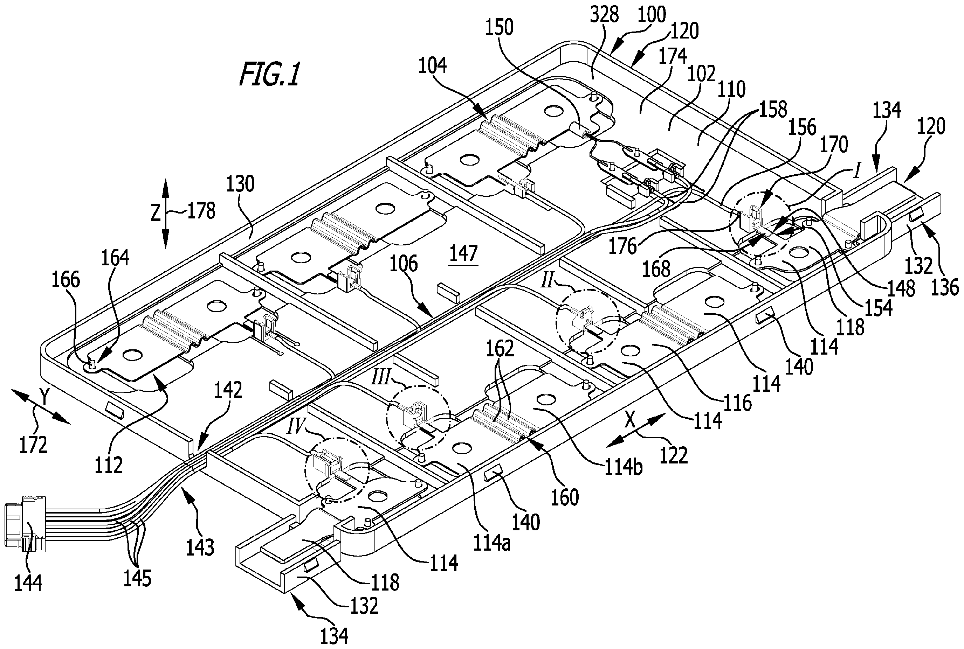

- Fig. 1: eine perspektivische Darstellung eines Trägerelements eines Zellkontaktierungssystems für eine elektrochemische Vorrichtung, insbesondere ein Akkumulatormodul, eines an dem Trägerelement gehaltenen Stromleitungssystems, eines an dem Trägerelement gehaltenen Signalleitungssystems und mehrerer Ausführungsformen von signalleitungssystemseitigen Positionierelementen und damit zusammenwirkenden trägerelementseitigen Positionierelementen, wobei jeweils ein signalleitungssystemseitiges Positionierelement zumindest zeitweise mit einem zugeordneten trägerelementseitigen Positionierelement so verbunden ist, dass das signalleitungssystemseitige Positionierelement in einer gewünschten Position relativ zu einem Zellverbinder des Stromleitungssystems gehalten ist, mit der Blickrichtung von rechts oben;
- Fig. 2: eine weitere perspektivische Darstellung des Trägerelements, des Stromleitungssystems, des Signalleitungssystems und der signalleitungssystemseitigen Positionierelemente sowie der trägerelementseitigen Positionierelemente aus Fig. 1, mit der Blickrichtung von links oben;
- Fig. 3: eine Draufsicht von oben auf das Trägerelement, das Stromleitungssystem, das Signalleitungssystem, die signalleitungssystemseitigen Positionierelemente und die trägerelementseitigen Positionierelemente aus den Fig. 1 und 2;
- Fig. 4: eine der Fig. 3 entsprechende Draufsicht von oben auf das Zellkontaktierungssystem, nachdem ein Abdeckelement auf das Trägerelement aufgesetzt worden ist;
- Fig. 5: eine vergrößerte Darstellung des Bereichs I aus Fig. 1;
- Fig. 6: eine perspektivische Darstellung des signalleitungssystemseitigen Positionierelements aus Fig. 5, ohne das trägerelementseitige Positionierelement und ohne das Trägerelement;
- Fig. 7: einen Längsschnitt durch ein dem signalleitungssystemseitigen Positionierelement aus den Fig. 5 und 6 entsprechendes signalleitungssystemseitiges Positionierelement sowie ein zugeordnetes trägerelementseitiges Positionierelement und einen Zellverbinder, längs der Linie 7 - 7 in Fig. 3;
- Fig. 8: eine vergrößerte Darstellung des Bereichs II aus Fig. 1;
- Fig. 9: eine perspektivische Darstellung des signalleitungssystemseitigen Positionierelements aus Fig. 8, ohne das trägerelementseitige Positionierelement und ohne das Trägerelement;
- Fig. 10: einen Längsschnitt durch das signalleitungssystemseitige Positionierelement, das zugeordnete trägerelementseitige Positionierelement und den zugeordneten Zellverbinder aus Fig. 8, längs der Linie 10 - 10 in Fig. 3;
- Fig. 11: eine vergrößerte Darstellung des Bereichs III aus Fig. 1;
- Fig. 12: eine perspektivische Darstellung des signalleitungssystemseitigen Positionierelements aus Fig. 11, ohne das trägerelementseitige Positionierelement und ohne das Trägerelement;
- Fig. 13: einen Längsschnitt durch das signalleitungssystemseitige Positionierelement, das zugeordnete trägerelementseitige Positionierelement und den Zellverbinder aus Fig. 11, längs der Linie 13 - 13 in Fig. 3;
- Fig. 14: eine vergrößerte Darstellung des Bereichs IV aus Fig. 1;
- Fig. 15: eine perspektivische Darstellung des signalleitungssystemseitigen Positionierelements aus Fig. 14, ohne das trägerelementseitige Positionierelement und ohne das Trägerelement;
- Fig. 16: einen Längsschnitt durch das signalleitungssystemseitige Positionierelement, das zugeordnete trägerelementseitige Positionierelement und den zugeordneten Stromanschluss aus Fig. 14, längs der Linie 16 - 16 in Fig. 3;
- Fig. 17: eine vergrößerte Darstellung des Bereichs V aus Fig. 2;
- Fig. 18: eine perspektivische Darstellung des signalleitungssystemseitigen Positionierelements aus Fig. 17, ohne das trägerelementseitige Positionierelement und ohne das Trägerelement;
- Fig. 19: einen Längsschnitt durch das signalleitungssystemseitige Positionierelement, das zugeordnete trägerelementseitige Positionierelement und den zugeordneten Zellverbinder aus Fig. 17, längs der Linie 19 - 19 in Fig. 3;
- Fig. 20: eine vergrößerte Darstellung des Bereichs VI aus Fig. 2;
- Fig. 21: eine perspektivische Darstellung einer elektrochemischen Vorrichtung mit einem Gehäuse und mehreren darin angeordneten elektrochemischen Zellen, wobei das in den Fig. 1 bis 4 dargestellte Zellkontaktierungssystem auf das Gehäuse aufsetzbar und mit Zellterminals der elektrochemischen Zellen elektrisch leitend verbindbar ist.

Gleiche oder funktional äquivalente Elemente sind in allen Figuren mit denselben Bezugszeichen bezeichnet.

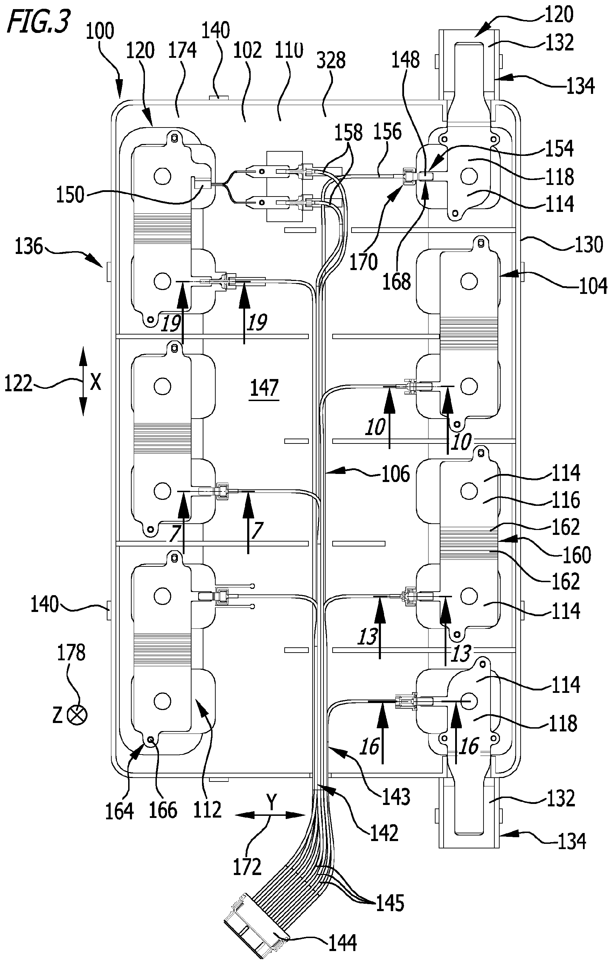

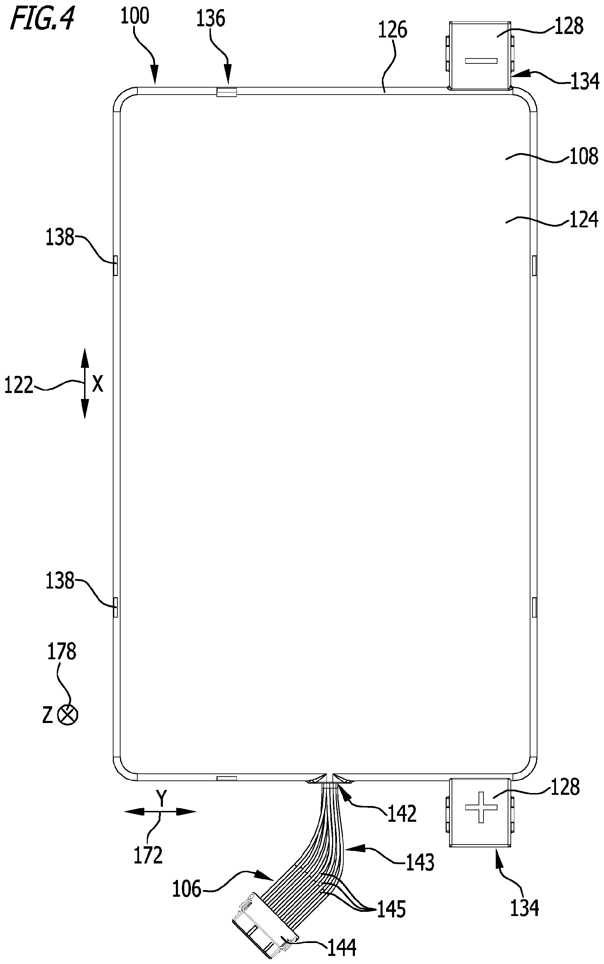

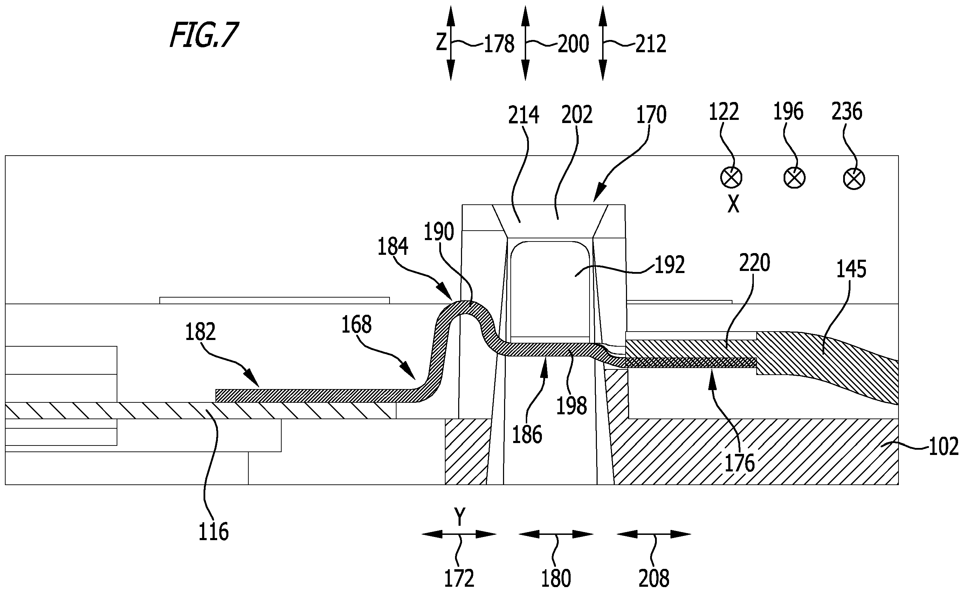

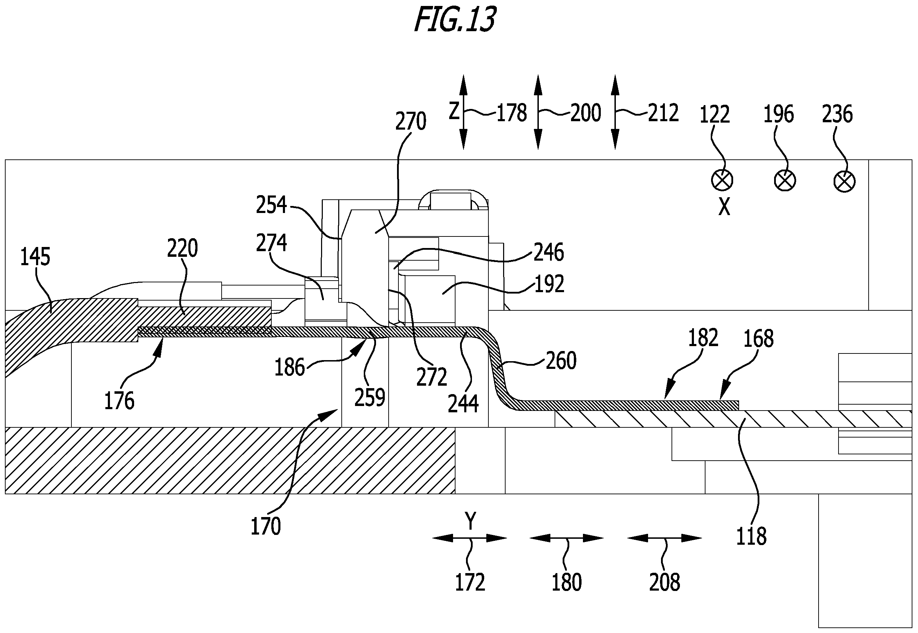

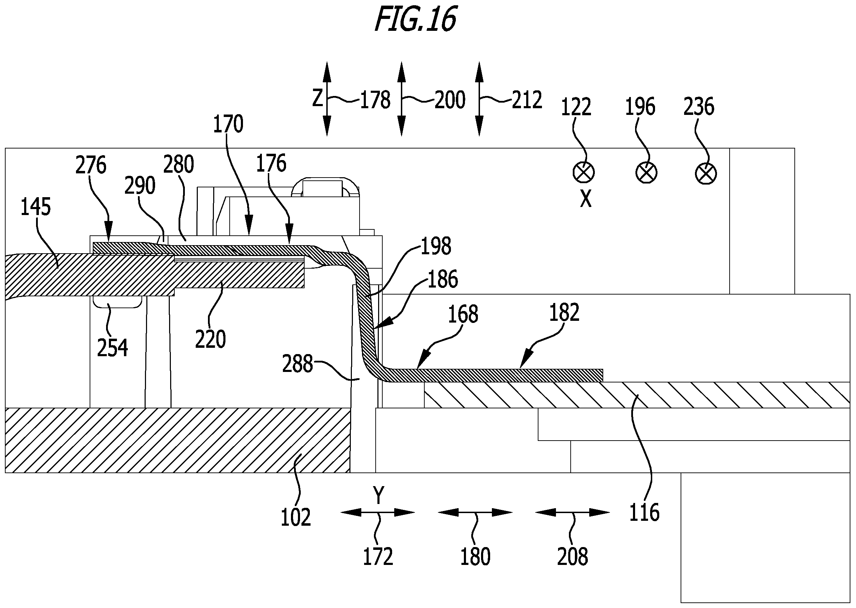

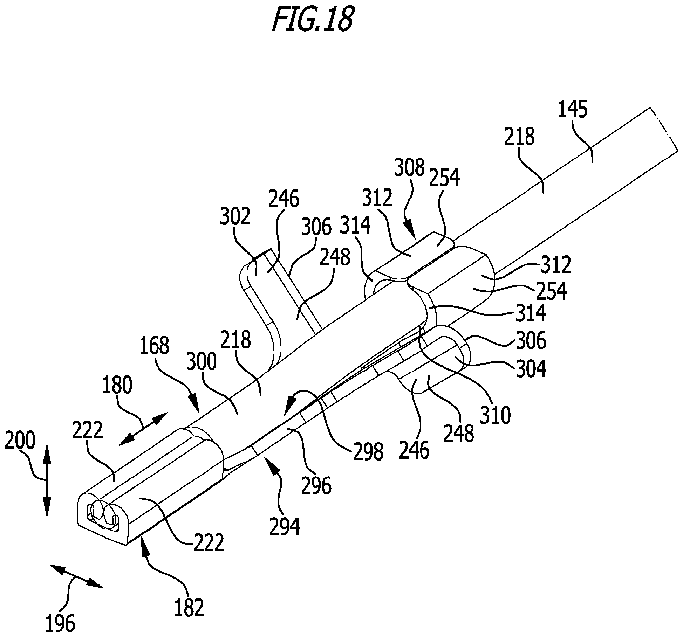

Ein in den Fig. 1 bis 20 dargestelltes, als Ganzes mit 100 bezeichnetes Zellkontaktierungssystem umfasst ein Trägerelement 102, an dem ein Stromleitungssystem 104 und ein Signalleitungssystem 106 gehalten sind, und ein in Fig. 4 dargestelltes, auf das Trägerelement 102 aufsetzbares Abdeckelement 108.

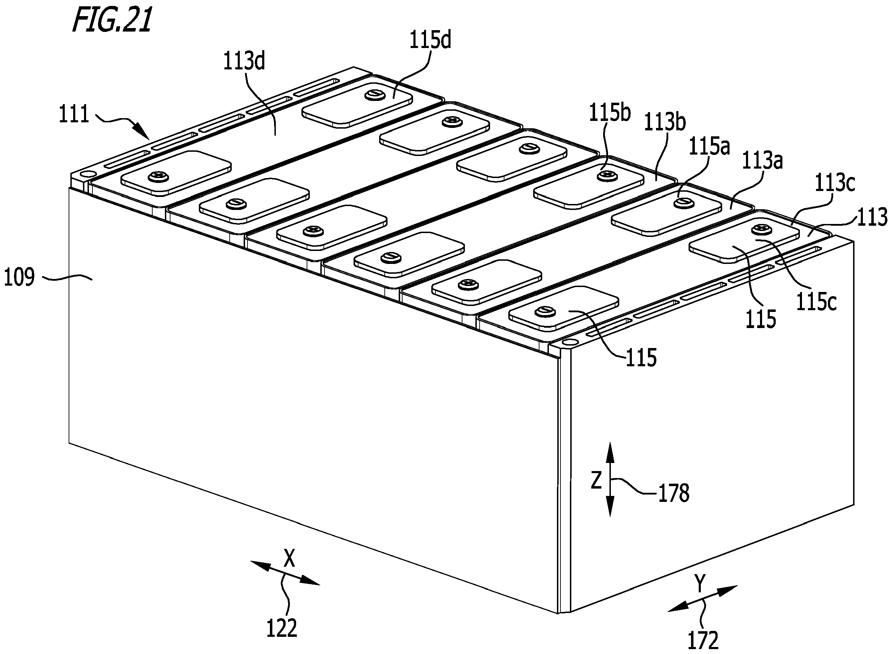

Das Trägerelement 102 ist auf ein (in Fig. 21 dargestelltes) Gehäuse 109 einer elektrochemischen Vorrichtung 111, beispielsweise eines Akkumulatormoduls, mit mehreren elektrochemischen Zellen 113, insbesondere Akkumulatorzellen, aufsetzbar und verschließt im montierten Zustand der elektrochemischen Vorrichtung 111 eine obere Gehäuseöffnung, durch welche Zellterminals 115 der elektrochemischen Zellen 113 der elektrochemischen Vorrichtung 111 hervorstehen.

Das Trägerelement 102 kann beispielsweise in Form einer vorzugsweise im Wesentlichen rechteckigen Trägerplatte 110 ausgebildet sein.

Das Trägerelement 102 ist mit einer Mehrzahl von Durchtrittsöffnungen 112 versehen, wobei jede Durchtrittsöffnung 112 einerseits jeweils einem Kontaktbereich 114 eines Zellverbinders 116 oder eines Stromanschlusses 118 und andererseits jeweils einem Zellterminal 115 der elektrochemischen Zellen 113 der elektrochemischen Vorrichtung 111 zugeordnet ist, so dass durch eine solche Durchtrittsöffnung 112 jeweils ein Zellterminal 115 mit einem zugeordneten Kontaktbereich 114 eines Zellverbinders 116 oder eines Stromanschlusses 118 verbindbar ist.

Bei dieser Ausführungsform sind die Zellverbinder 116 also als zusätzlich zu den Zellterminals 115 vorgesehene, die Zellterminals 115 und damit die Zellpole der elektrochemischen Zellen 113 elektrisch leitend miteinander verbindende Elemente ausgebildet.

Alternativ hierzu könnte auch vorgesehen sein, dass die Zellterminals 115 so ausgestaltet und direkt aneinander festgelegt sind, dass sie die Zellpole der jeweiligen elektrochemischen Zellen 113 elektrisch leitend miteinander verbinden und somit selbst (insbesondere jeweils paarweise) einen Zellverbinder 116 bilden.

Dabei kann sich beispielsweise ein Zellterminal 115 durch die Durchtrittsöffnung 112 hindurch erstrecken, um in Kontakt mit einem Kontaktbereich 114 eines Zellverbinders 116 oder eines Stromanschlusses 118 zu kommen.

Alternativ hierzu kann sich auch ein Kontaktbereich 114 eines Zellverbinders 116 oder eines Stromanschlusses 118 durch die jeweils zugeordnete Durchtrittsöffnung 112 hindurch erstrecken, um in Kontakt mit dem jeweils zugeordneten Zellterminal 115 zu kommen.

Ferner ist auch denkbar, dass sich sowohl das Zellterminal 115 als auch der Kontaktbereich 114 des Zellverbinders 116 beziehungsweise des Stromanschlusses 118 beide in die Durchtrittsöffnung 112 hinein erstrecken und dort miteinander verbunden sind.

Wie aus den Fig. 1 bis 3 zu ersehen ist, können die Durchtrittsöffnungen 112 des Trägerelements 102 in mehreren Reihen 120 angeordnet sein, wobei die Reihen 120 sich beispielsweise in einer Längsrichtung 122 des Trägerelements 102 erstrecken.

Diese Längsrichtung 122 des Trägerelements 102 wird im Folgenden auch als die X-Richtung des Zellkontaktierungssystems 100 bezeichnet.

Die Durchtrittsöffnungen 112 können insbesondere im Wesentlichen rechteckig ausgebildet sein, insbesondere mit abgerundeten Eckbereichen; grundsätzlich sind aber auch andere Formen der Durchtrittsöffnungen 112, insbesondere kreisförmige, ovale, quadratische oder polygonale Durchtrittsöffnungen 112, möglich.

An der im montierten Zustand des Zellkontaktierungssystems 100 den elektrochemischen Zellen 113 abgewandten Oberseite des Trägerelements 102 ist das Abdeckelement 108 angeordnet, welches zum Abdecken des Stromleitungssystems 104 und des Signalleitungssystems 106 dient.

Das Abdeckelement 108 ist beispielsweise in Form einer im Wesentlichen rechteckigen Abdeckplatte 124 ausgebildet.

Das Abdeckelement 108 und/oder das Trägerelement 102 umfasst vorzugsweise ein thermoplastisches Material, beispielsweise Polypropylen.

Vorzugsweise ist das Abdeckelement 108 und/oder das Trägerelement 102 im Wesentlichen vollständig aus einem thermoplastischen Material, beispielsweise aus Polypropylen, gebildet.

Wie aus Fig. 4 zu ersehen ist, ist das Abdeckelement 108 ferner vorzugsweise mit einem längs eines äußeren Randes umlaufenden, im montierten Zustand des Zellkontaktierungssystems 100 zu dem Trägerelement 102 hin vorstehenden Randbereich 126 versehen.

Der Randbereich 126 des Abdeckelements 108 kann von zwei Durchtrittskanälen 128 unterbrochen sein, welche vom Rand des Abdeckelements 108, beispielsweise in der X-Richtung 122 nach vorne oder nach hinten, vorstehen und beispielsweise einen im Wesentlichen U-förmigen Querschnitt aufweisen können.

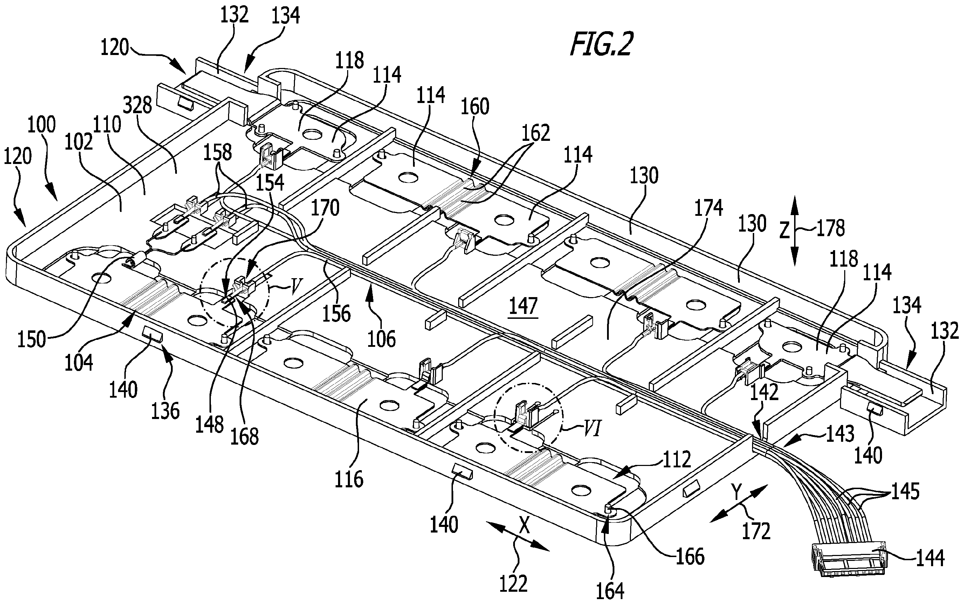

Wie am besten aus den Fig. 1 und 2 zu ersehen ist, ist auch das Trägerelement 102 vorzugsweise mit einem längs eines äußeren Randes umlaufenden, im montierten Zustand des Zellkontaktierungssystems 100 zu dem Abdeckelement 108 hin vorstehenden Randbereich 130 versehen.

Auch der Randbereich 130 des Trägerelements 102 kann von zwei Durchtrittskanälen 132 unterbrochen sein, welche vom Rand des Trägerelements 102, vorzugsweise in der X-Richtung 122 nach vorne oder nach hinten, vorstehen und beispielsweise einen im Wesentlichen U-förmigen Querschnitt aufweisen können.

Die Durchtrittskanäle 132 des Trägerelements 102 und die Durchtrittskanäle 128 des Abdeckelements 108 sind an einander entsprechenden Stellen der jeweiligen Randbereiche 130 beziehungsweise 126 angeordnet und mit ihren offenen Seiten einander zugewandt, so dass die Durchtrittskanäle 132, 128 zusammen jeweils einen Durchtrittsschacht 134 bilden, welcher zur Aufnahme jeweils eines der Stromanschlüsse 118 des Zellkontaktierungssystems 100 dient.

Die Stromanschlüsse 118 und die Zellverbinder 116, mittels welcher die Zellterminals 115 jeweils zweier einander benachbarter elektrochemischer Zellen 113 mit unterschiedlicher Polarität elektrisch leitend miteinander verbindbar sind, bilden zusammen das Stromleitungssystem 104 des Zellkontaktierungssystems 100.

Das Stromleitungssystem 104 dient dazu, einen Stromfluss zwischen den elektrochemischen Zellen 113 der elektrochemischen Vorrichtung 111 und zu den oder von den Stromanschlüssen 118 des Zellkontaktierungssystems 100 zu ermöglichen.

Durch dieses Stromleitungssystem 104 werden beispielsweise die elektrochemischen Zellen 113 der elektrochemischen Vorrichtung 111 elektrisch in Reihe geschaltet.

Dabei verbindet jeder Zellverbinder 116 ein erstes Zellterminal 115a negativer Polarität einer ersten elektrochemischen Zelle 113a mit einem zweiten Zellterminal 115b positiver Polarität einer benachbarten zweiten elektrochemischen Zelle 113b (siehe Fig. 21).

Jeweils ein Zellterminal 115c der den Anfang der Zellen-Reihenschaltung der elektrochemischen Vorrichtung bildenden elektrochemischen Zelle 113c und ein Zellterminal 115d der das Ende der Zellen-Reihenschaltung bildenden elektrochemischen Zelle 113d sind elektrisch leitend mit einem der elektrisch leitenden Stromanschlüsse 118 des Zellkontaktierungssystems 100 verbunden.

Mehrere elektrochemische Vorrichtungen 111 mit jeweils einem Zellkontaktierungssystem 100 sind vorzugsweise elektrisch in Reihe geschaltet.

Eine solche Reihenschaltung kann insbesondere dadurch hergestellt werden, dass ein Stromanschluss 118 einer ersten elektrochemischen Vorrichtung 111 mittels eines (nicht dargestellten) Modulverbinders elektrisch leitend mit einem elektrischen Stromanschluss 118 (entgegengesetzter Polarität) einer zweiten elektrochemischen Vorrichtung 111 verbunden wird.

Um das Abdeckelement 108 lösbar an dem Trägerelement 102 festlegen zu können, ist vorzugsweise eine Rastvorrichtung 136 vorgesehen, welche ein oder mehrere an dem Abdeckelement 108 vorgesehene Rastelemente 138 und ein oder mehrere an dem Trägerelement 102 vorgesehene Rastelemente 140 umfasst.

Die abdeckelementseitigen Rastelemente 138 und die trägerelementseitigen Rastelemente 140 sind an einander entsprechenden Stellen des Randbereichs 126 des Abdeckelements 108 beziehungsweise des Randbereichs 130 des Trägerelements 102 angeordnet und verrasten miteinander, wenn das Abdeckelement 108 auf das Trägerelement 102 aufgesetzt wird, so dass das Abdeckelement 108 mittels der Rastvorrichtung 136 lösbar an dem Trägerelement 102 gehalten ist.

Das Trägerelement 102 ist an seinem Randbereich 130 vorzugsweise mit einer Anschlussausnehmung 142 versehen, durch welche ein Signalleitungsbaum 143 aus einer Mehrzahl von Signalleitungen 145, die an einen Signalleitungsanschluss 144 angeschlossen sind, aus einem von dem Trägerelement 102 und dem Abdeckelement 108 umgebenen Innenraum 147 des Zellkontaktierungssystems 100 hinaus geführt ist.

Im Außenraum des Zellkontaktierungssystems 100 ist der Signalleitungsanschluss 144 für die Kontaktierung mit einem zum Signalleitungsanschluss 144 komplementären Signalleitungselement zugänglich.

Der Signalleitungsanschluss 144 kann beispielsweise als ein Signalleitungsstecker ausgebildet sein.

In diesem Fall ist das komplementär zu dem Signalleitungsanschluss 144 ausgebildete Signalleitungselement vorzugsweise als eine Signalleitungsbuchse ausgebildet.

Der Signalleitungsanschluss 144 dient zum Anschließen des an dem Trägerelement 102 angeordneten Signalleitungssystems 106 an eine (nicht dargestellte) Überwachungsvorrichtung der elektrochemischen Vorrichtung 111 über eine (nicht dargestellte), vorzugsweise mehrpolige, Verbindungsleitung.

Das Signalleitungssystem 106 dient zum Verbinden von einer oder mehreren Spannungsabgriffstellen 148 an jeweils einem Zellverbinder 116 oder Stromanschluss 118 und/oder von einem oder mehreren Temperatursensoren 150 des Zellkontaktierungssystems 100 mit dem Signalleitungsanschluss 144.

Das Signalleitungssystem 106 umfasst die Signalleitungen 145, welche jeweils eine Signalquelle 154 elektrisch leitend mit dem Signalleitungsanschluss 144 (oder direkt mit einer Überwachungsvorrichtung des Zellkontaktierungssystems 100) verbinden.

Wenn die Signalquelle 154 eine Spannungsabgriffstelle 148 an einem Zellverbinder 116 oder an einem Stromanschluss 118 ist, so ist diese Signalquelle 154 über eine Spannungsabgriffsleitung 156 mit dem Signalleitungsanschluss 144 verbunden.

Die Spannungsabgriffstellen 148 sind an jeweils einem Kontaktbereich 114 eines Zellverbinders 116 oder eines Stromanschlusses 118 des Zellkontaktierungssystems 100 angeordnet, um das dort jeweils herrschende elektrische Potential abgreifen zu können.

Wenn die Signalquelle 154 ein Temperatursensor 150 ist, so ist die Signalquelle 154 mittels einer oder mehrerer Temperaturmessleitungen 158 elektrisch leitend mit dem Signalleitungsanschluss 144 (oder direkt mit einer Überwachungsvorrichtung des Zellkontaktierungssystems 100) verbunden.

Die Temperatursensoren 150 stehen vorzugsweise ebenfalls in Kontakt mit einem Kontaktbereich 114 eines Zellverbinders 116 oder eines Stromanschlusses 118 des Zellkontaktierungssystems 100, um die dort herrschende Temperatur messen zu können.

Jeder der Kontaktbereiche 114 der Zellverbinder 116 und jeder Stromanschluss 118 ist jeweils einem Zellterminal 115 der elektrochemischen Vorrichtung 111 zugeordnet und im montierten Zustand der elektrochemischen Vorrichtung 111 elektrisch leitend, vorzugsweise stoffschlüssig, mit dem jeweils zugeordneten Zellterminal 115 verbunden.

Jeder Zellverbinder 116 umfasst zwei Kontaktbereiche 114 zum elektrischen Kontaktieren von jeweils einem Zellterminal 115 und einen die beiden Kontaktbereiche 114 miteinander verbindenden Kompensationsbereich 160.

Der Kompensationsbereich 160 ist vorzugsweise elastisch und/oder plastisch verformbar, um eine Relativbewegung der beiden Kontaktbereiche 114 des Zellverbinders 116 relativ zueinander im Betrieb der elektrochemischen Vorrichtung 111 und/oder zum Toleranzausgleich bei der Montage des Zellkontaktierungssystems 100 zu ermöglichen.

Zu diesem Zweck kann der Kompensationsbereich 160 insbesondere eine oder mehrere quer zu einer Verbindungsrichtung, welche ein Zentrum des ersten Kontaktbereichs 114a mit einem Zentrum des zweiten Kontaktbereichs 114b des Zellverbinders 116 miteinander verbindet, verlaufende Kompensationswellen 162 aufweisen.

Jeder Kontaktbereich 114 eines Zellverbinders 116 oder eines Stromanschlusses 118 kann mittels jeweils eines Positionierungsloches 164 an einem jeweils zugeordneten Positionierungsstift 166 des Trägerelements 102 positioniert sein.

Dabei durchsetzt vorzugsweise der Positionierungsstift 166 des Trägerelements 102 das jeweils zugeordnete Positionierungsloch 164 des Zellverbinders 116 beziehungsweise des Stromanschlusses 118.

Das Trägerelement 102 und/oder das Abdeckelement 108 umfasst vorzugsweise ein elektrisch nicht leitendes Kunststoffmaterial, beispielsweise PBT (Polybutylenterephthalat), PP (Polypropylen), PA (Polyamid), ABS (AcrylnitrilButadien-Styrol) und/oder LCP ("Liquid Crystal Polymer"), und ist vorzugsweise im Wesentlichen vollständig aus einem solchen Kunststoffmaterial gebildet.

Ein besonders geeignetes Material für das Trägerelement 102 ist ein mit Talkum verstärktes Polypropylen-Material (beispielsweise das Material mit der Bezeichnung PPT TV 20). Dieses Material weist durch die Talkumverstärkung eine besonders hohe Formstabilität auf.

Mindestens eine Signalleitung 145 des Signalleitungssystems 106, vorzugsweise mindestens eine Spannungsabgriffsleitung 156 und insbesondere alle Spannungsabgriffsleitungen 156 des Signalleitungssystems 106, ist elektrisch leitend mit einem signalleitungssystemseitigen Positionierelement 168 verbunden, welches einerseits an der betreffenden Signalleitung 145 und andererseits an einem Zellverbinder 116 oder an einem Stromanschluss 118 des Stromleitungssystems 104 festgelegt ist.

Jedes signalleitungssystemseitige Positionierelement 168 ist zumindest zeitweise, insbesondere während der Montage des Zellkontaktierungssystems 100, mit einem jeweils zugeordneten trägerelementseitigen Positionierelement 170 verbunden, und zwar derart, dass das signalleitungssystemseitige Positionierelement 168 durch das trägerelementseitige Positionierelement 170 in einer gewünschten Position relativ zu einem Zellverbinder 116 oder einem Stromanschluss 118 des Stromleitungssystems 104 gehalten ist.

Dabei ist durch das Zusammenwirken des trägerelementseitigen Positionierelements 170 und des signalleitungssystemseitigen Positionierelements 168 vorzugsweise nur die Position des signalleitungssystemseitigen Positionierelements 168 längs der X-Richtung 122 und längs einer Y-Richtung 172 festgelegt, wobei die Y-Richtung 172 senkrecht zu der X-Richtung 122 des Zellkontaktierungssystems 100 und vorzugsweise im Wesentlichen parallel zu einer Hauptfläche 174 des Trägerelements 102 ausgerichtet ist, so dass die Zellverbinder 116 und die Stromanschlüsse 118 des Zellkontaktierungssystems 100 in der von der X-Richtung 122 und der Y-Richtung 172 aufgespannten Ebene nebeneinander an dem Trägerelement 102 angeordnet sind.

Zumindest ein Kontaktbereich 182 des signalleitungssystemseitigen Positionierelements 168, der im montierten Zustand des Zellkontaktierungssystems 100 an dem jeweils zugeordneten Zellverbinder 116 oder Stromanschluss 118 anliegt und mit demselben elektrisch leitend, vorzugsweise stoffschlüssig, verbunden ist, ist aber vorzugsweise relativ zu dem trägerelementseitigen Positionierelement 170 längs einer Z-Richtung 178 beweglich, während das trägerelementseitige Positionierelement 170 die Position des signalleitungssystemseitigen Positionierelements 168 in der von der X-Richtung 122 und der Y-Richtung 172 aufgespannten Ebene festlegt. Dabei ist die Z-Richtung 178 senkrecht zu der X-Richtung 122 und senkrecht zu der Y-Richtung 172 ausgerichtet.

Vorzugsweise ist die Z-Richtung 178 des Zellkontaktierungssystems 100 im Wesentlichen parallel zu der Richtung ausgerichtet, längs welcher die Zellterminals 115 der elektrochemischen Zellen 113 aus dem jeweiligen Zellgehäuse vorstehen (siehe Fig. 21).

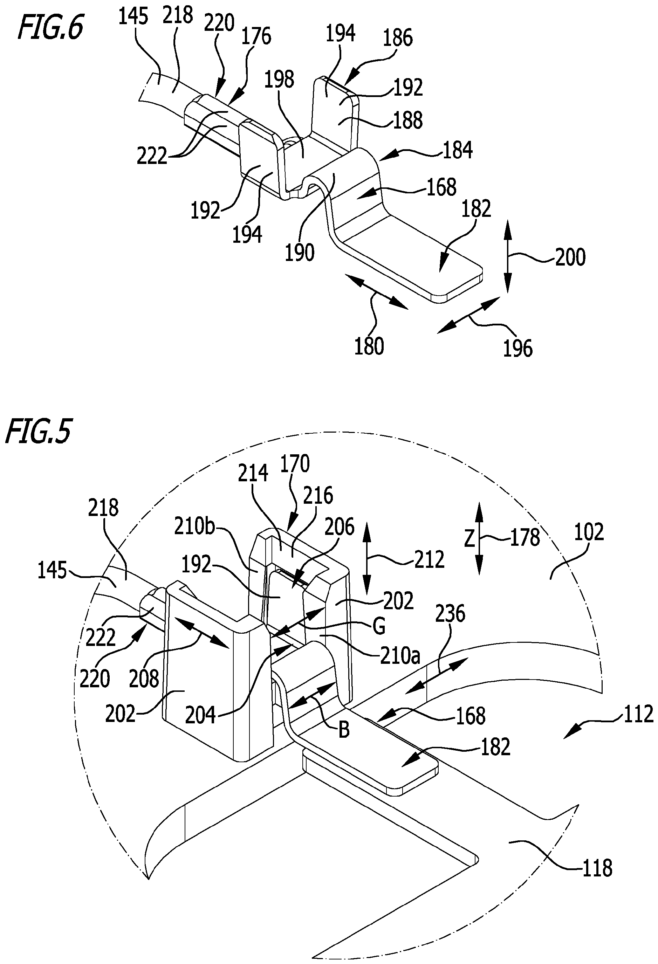

Eine mögliche Ausführungsform eines signalleitungssystemseitigen Positionierelements 168 und eines demselben zugeordneten trägerelementseitigen Positionierelements 170 ist in den Fig. 5 bis 7 im Detail dargestellt.

Das signalleitungssystemseitige Positionierelement 168 umfasst bei dieser Ausführungsform den Kontaktbereich 182, welcher im montierten Zustand des Zellkontaktierungssystems 100 an dem jeweils zugeordneten Zellverbinder 116 oder Stromanschluss 118 anliegt und mit demselben elektrisch leitend, vorzugsweise stoffschlüssig, verbunden ist, einen sich in einer Längsrichtung 180 des signalleitungssystemseitigen Positionierelements 168 an den Kontaktbereich 176 anschließenden Verformungsbereich 184, einen sich auf der dem Kontaktbereich 182 abgewandten Seite des Verformungsbereichs 184 an den Verformungsbereich 184 in der Längsrichtung 180 anschließenden Verbindungsbereich 186 und einen sich auf der dem Verformungsbereich 184 und dem Kontaktbereich 182 abgewandten Seite des Verbindungsbereichs 186 an den Verbindungsbereich 186 in der Längsrichtung 180 anschließenden Anschlussbereich 176.

Der Kontaktbereich 182, der Verformungsbereich 184, der Verbindungsbereich 186 und der Anschlussbereich 176 des signalleitungssystemseitigen Positionierelements 168 sind vorzugsweise einstückig miteinander ausgebildet und bilden zusammen einen einstückigen Grundkörper 188 des signalleitungssystemseitigen Positionierelements 168.

Der Kontaktbereich 182 des signalleitungssystemseitigen Positionierelements 168 ist beispielsweise durch Verschweißung, insbesondere Ultraschallschweißung, Laserschweißung oder Widerstandsschweißung, durch Verlötung, Crimpung und/oder Vernietung an dem zugeordneten Zellverbinder 116 oder Stromanschluss 118 festgelegt.

Das signalleitungssystemseitige Positionierelement 168 umfasst ein elektrisch leitfähiges Material und ist vorzugsweise im Wesentlichen vollständig aus einem elektrisch leitfähigen Material gebildet.

Ein solches elektrisch leitfähiges Material ist insbesondere ein metallisches Material, beispielsweise Kupfer oder eine Kupferlegierung oder Aluminium oder eine Aluminiumlegierung.

Für das signalleitungssystemseitige Positionierelement 168 sind auch Materialkombinationen möglich, beispielsweise Kupfer und Zink.

Das signalleitungssystemseitige Positionierelement 168 kann ferner mit einer Oberflächenbeschichtung, die beispielsweise Zink oder Nickel enthält, versehen sein.

Eine Zink enthaltende Oberflächenbeschichtung erleichtert dabei das Herstellen einer Lötverbindung.

Eine Nickel enthaltende Oberflächenbeschichtung erleichtert dabei das Herstellen einer Ultraschall-Schweißverbindung.

Der Verformungsbereich 184 dient dazu, eine Relativbewegung des Kontaktbereichs 182 und des Verbindungsbereichs 186 des signalleitungssystemseitigen Positionierelements 168 relativ zueinander im Betrieb der elektrochemischen Vorrichtung 111 und/oder zum Toleranzausgleich bei der Montage des Zellkontaktierungssystems 100 zu ermöglichen.

Zu diesem Zweck kann der Verformungsbereich 184 insbesondere eine oder mehrere quer zu der Längsrichtung 180 des signalleitungssystemseitigen Positionierelements 168 verlaufende Wellen 190 aufweisen.

Eine solche Welle 190 ermöglicht eine Flexibilität des signalleitungssystemseitigen Positionierelements 168 in der Z-Richtung 178.

Eine besonders gute Flexibilität des Verformungsbereichs 184 wird erzielt, wenn die Materialstärke des signalleitungssystemseitigen Positionierelements 168 in dem Verformungsbereich 184, besonders bevorzugt im gesamten Grundkörper 188, höchstens ungefähr 0,6 mm, insbesondere höchstens ungefähr 0,3 mm, beträgt.

Der Verbindungsbereich 186 dient dazu, das signalleitungssystemseitige Positionierelement 168 zumindest zeitweise, insbesondere während der Montage des Zellkontaktierungssystems 100, mit dem jeweils zugeordneten trägerelementseitigen Positionierelement 170 zu verbinden.

Eine solche Verbindung kann insbesondere durch Verrastung, Verstemmung und/oder Verklemmung erfolgen.

Im in den Fig. 5 bis 7 dargestellten Ausführungsbeispiel weist der Verbindungsbereich 186 zum Zwecke der Verrastung mit dem trägerelementseitigen Positionierelement 170 ein oder mehrere Rastelemente 192, beispielsweise in Form von Rastzungen 194, auf, welche in einer senkrecht zu der Längsrichtung 180 des signalleitungssystemseitigen Positionierelements 168 verlaufenden Querrichtung 196 des signalleitungssystemseitigen Positionierelements 168 seitlich neben einem Mittelabschnitt 198 des Verbindungsbereichs 186 angeordnet sind und sich im Wesentlichen in einer Höhenrichtung 200 des signalleitungssystemseitigen Positionierelements 168 erstrecken, welche senkrecht zur Längsrichtung 180 und senkrecht zur Querrichtung 196 des signalleitungssystemseitigen Positionierelements 168 und im montierten Zustand des Zellkontaktierungssystems 100 im Wesentlichen parallel zur Z-Richtung 178 des Zellkontaktierungssystems 100 ausgerichtet ist.

Das beispielhaft in Fig. 5 dargestellte trägerelementseitige Positionierelement 170 umfasst beispielsweise zwei Positioniervorsprünge 202, die in einer Querrichtung 236 des trägerelementseitigen Positionierelements 170, welche beispielsweise parallel zu der X-Richtung 122 des Zellkontaktierungssystems 100 verläuft, voneinander beabstandet sind und somit zwischen sich einen Positionierspalt 204 ausbilden, durch welchen sich das signalleitungssystemseitige Positionierelement 168 hindurch erstreckt.

Dabei entspricht die Spaltbreite G im Wesentlichen der Breite B des signalleitungssystemseitigen Positionierelements 168 im Bereich des Positionierspalts 204 (das heißt dessen Erstreckung in der Querrichtung 196), so dass das signalleitungssystemseitige Positionierelement 168 durch die Begrenzungen des Positionierspalts 204 in seiner Querrichtung 196 in gewünschter Weise positioniert ist.

Ferner umfasst jeder Positioniervorsprung 202 eine Rastaufnahme 206, die in der Längsrichtung 208 des trägerelementseitigen Positionierelements 170, welche im montierten Zustand des Zellkontaktierungssystems 100 mit der Längsrichtung 180 des signalleitungssystemseitigen Positionierelements 168 übereinstimmt, durch zwei in der Längsrichtung 208 voneinander beabstandete Führungsleisten 210a und 210b und längs der Höhenrichtung 212 des trägerelementseitigen Positionierelements 170, welche mit der Z-Richtung 178 des Zellkontaktierungssystems 100 übereinstimmt, nach oben hin durch ein Rastelement 214, beispielsweise in Form einer Rastnase 216, begrenzt ist.

In den Rastaufnahmen 206 der Positioniervorsprünge 202 ist jeweils ein Rastelement 192 des signalleitungssystemseitigen Positionierelements 168 so aufgenommen, dass das jeweilige Rastelement 192 mit seinem oberen Rand an dem Rastelement 214 des trägerelementseitigen Positionierelements 170 und mit seinen seitlichen Rändern an den Führungsleisten 210 anliegt.

Somit ist durch die Verrastung der Rastelemente 192 des signalleitungssystemseitigen Positionierelements 168 mit dem trägerelementseitigen Positionierelement 170 das signalleitungssystemseitige Positionierelement 168 auch in seiner Längsrichtung 180 und seiner Höhenrichtung 200 in gewünschter Weise relativ zu dem trägerelementseitigen Positionierelement 170 und damit relativ zu dem Trägerelement 102 und relativ zu dem jeweils zugeordneten Zellverbinder 116 oder Stromanschluss 118 positioniert.

Das trägerelementseitige Positionierelement 170, einschließlich dessen Positioniervorsprüngen 202, ist vorzugsweise einstückig mit dem Trägerelement 102 ausgebildet.

Insbesondere kann vorgesehen sein, dass das Trägerelement 102 einschließlich des trägerelementseitigen Positionierelements 170 durch ein Spritzgießverfahren hergestellt ist.

Der Anschlussbereich 176 des signalleitungssystemseitigen Positionierelements 168 dient dazu, das signalleitungssystemseitige Positionierelement 168 an der jeweils zugeordneten Signalleitung 145 festzulegen.

Die Signalleitung 145 umfasst vorzugsweise eine Mehrzahl von Einzelleitern oder Litzen, die von einem Isolationsmantel oder einer Umhüllung 218 aus einem elektrisch isolierenden Material umgeben sind.

In einem abisolierten Endabschnitt 220 der Signalleitung 145 ist diese elektrisch isolierende Umhüllung 218 entfernt, so dass eine elektrisch leitende Verbindung zwischen den Einzelleitern der Signalleitung 145 und dem signalleitungssystemseitigen Positionierelement 168 herstellbar ist.

Dabei kann das signalleitungssystemseitige Positionierelement 168 beispielsweise durch Verschweißung, insbesondere durch Ultraschallschweißung, Laserschweißung oder Widerstandsschweißung, durch Verlötung, durch Crimpung und/oder durch Vernietung an der zugeordneten Signalleitung 145 festgelegt sein.

Bei dem in den Fig. 5 bis 7 dargestellten Ausführungsbeispiel ist der Endabschnitt 220 der Signalleitung 145 durch Crimpung mittels an dem signalleitungssystemseitigen Positionierelement 168 vorgesehener Crimpelemente 222 elektrisch leitend mit dem signalleitungssystemseitigen Positionierelement 168 verbunden.

Es kann auch vorgesehen sein, dass Endabschnitte 220 mehrerer Signalleitungen 145 elektrisch leitend mit dem signalleitungssystemseitigen Positionierelement 168 verbunden werden.

Im Falle einer Verbindung durch Crimpung werden in diesem Fall die Endabschnitte 220 mehrerer Signalleitungen 145 in den Crimp eingelegt, der durch die Crimpelemente 222 des signalleitungssystemseitigen Positionierelements 168 gebildet wird.

In den Fig. 1 bis 20 sind neben der in den Fig. 5 bis 7 im Detail dargestellten Ausführungsform eines signalleitungssystemseitigen Positionierelements 168 und eines demselben zugeordneten trägerelementseitigen Positionierelements 170 noch weitere Ausführungsformen solcher Positionierelemente 168 und 170, die anderen Zellverbindern 116 oder Stromanschlüssen 118 zugeordnet sind, dargestellt.

Diese Darstellung unterschiedlicher Ausführungsformen von signalleitungssystemseitigen Positionierelementen 168 und trägerelementseitigen Positionierelementen 170 im selben Zellkontaktierungssystem 100 dient aber nur Erläuterungszwecken.

Grundsätzlich ist es auch möglich, alle diese Positionierelemente 168 beziehungsweise 170 im Wesentlichen identisch miteinander auszubilden.

Außerdem können beliebig viele Exemplare jeder beliebigen, in dieser Beschreibung dargestellten Ausführungsform der Positionierelemente 168 und 170 in einem Zellkontaktierungssystem 100 mit einer beliebigen Anzahl beliebiger anderer Ausführungsformen solcher Positionierelemente 168 beziehungsweise 170 kombiniert werden.

Das vorstehend beschriebene Zellkontaktierungssystem 100 wird vorzugsweise als eine separate Baugruppe der elektrochemischen Vorrichtung 111 komplett vormontiert.

Bei dieser Vormontage werden die Bestandteile des Stromleitungssystems 104, insbesondere die Zellverbinder 116 und die Stromanschlüsse 118, sowie ein oder mehrere Temperatursensoren 150 mit Anschlusselementen, beispielsweise mit Anschlussdrähten, an dem Trägerelement 102 positioniert.

Die Signalleitungen 145 werden einerseits mit dem Signalleitungsanschluss 144 und andererseits, an ihren Endabschnitten 220, mit dem jeweils zugeordneten signalleitungssystemseitigen Positionierelement 168 verbunden.

Die signalleitungssystemseitigen Positionierelemente 168 werden beispielsweise hergestellt, indem ein Materialabschnitt aus einem Ausgangsmaterial, beispielsweise aus einem metallischen Ausgangsmaterial, abgetrennt und der abgetrennte Materialabschnitt durch Umformvorgänge, insbesondere durch Biegevorgänge und/oder Prägevorgänge, in die gewünschte Form gebracht wird.

Anschließend werden die Signalleitungen 145 des Signalleitungssystems 106 so an dem Trägerelement 102 angeordnet, dass die signalleitungssystemseitigen Positionierelemente 168 in der gewünschten Position mit dem jeweils zugeordneten trägerelementseitigen Positionierelement 170 verbunden werden, beispielsweise durch Verrastung.

Anschließend werden die Kontaktbereiche 182 der signalleitungssystemseitigen Positionierelemente 168, welche in gewünschter Weise relativ zu dem jeweils zugeordneten Zellverbinder 116 oder Stromanschluss 118 positioniert sind, mit dem jeweiligen Zellverbinder 116 oder Stromanschluss 118 elektrisch leitend verbunden, vorzugsweise durch Stoffschluss, insbesondere durch Verlötung oder durch Verschweißung, beispielsweise durch Ultraschallschweißung, Widerstandsschweißung oder Laserschweißung.

Somit sind alle für die Kontaktierung der elektrochemischen Zellen 113 der elektrochemischen Vorrichtung 111 benötigten Bauteile in einer als Einheit handhabbaren Baugruppe, nämlich in dem Zellkontaktierungssystem 100, bereits in der erforderlichen relativen Positionierung zusammengefasst.

Das Trägerelement 102 mit dem Stromleitungssystem 104 und dem Signalleitungssystem 106 wird bei der Montage der elektrochemischen Vorrichtung 111 auf das Gehäuse 109 aufgesetzt, in welchem die elektrochemischen Zellen 113 angeordnet sind, und mit dem die Gehäuseöffnung umgebenden Rand des Gehäuse 109 verbunden.

Anschließend werden die Zellverbinder 116 und die Stromanschlüsse 118 elektrisch leitend mit den jeweils zugeordneten Zellterminals 115 der elektrochemischen Vorrichtung 111 kontaktiert, beispielsweise durch Stoffschluss, insbesondere durch Verschweißung, und/oder durch Formschluss.

Nach erfolgter Kontaktierung zwischen dem Stromleitungssystem 104 und den Zellterminals 115 der elektrochemischen Zellen 113 der elektrochemischen Vorrichtung 111 wird das Abdeckelement 108 auf das Trägerelement 102 aufgesetzt und mit demselben verbunden, insbesondere durch Verrastung, so dass das Abdeckelement 108 das Stromleitungssystem 104 und das Signalleitungssystem 106 des Zellkontaktierungssystems 100 abdeckt und vor einer ungewollten Berührung schützt.

Hierdurch wird eine Beschädigung des Stromleitungssystems 104 und des Signalleitungssystems 106 während des Transports und der Montage der elektrochemischen Vorrichtung 111 verhindert.

Die fertig montierte elektrochemische Vorrichtung 111 kann mit mehreren anderen elektrochemischen Vorrichtungen 111, insbesondere Akkumulatormodulen, zu einer elektrochemischen Vorrichtungsgruppe zusammengesetzt werden, wobei insbesondere verschiedene elektrochemische Vorrichtungen 111 mittels (nicht dargestellter) Modulverbinder, welche die Stromanschlüsse 118 verschiedener elektrochemischer Vorrichtungen 111 miteinander verbinden, zusammengeschaltet werden können.

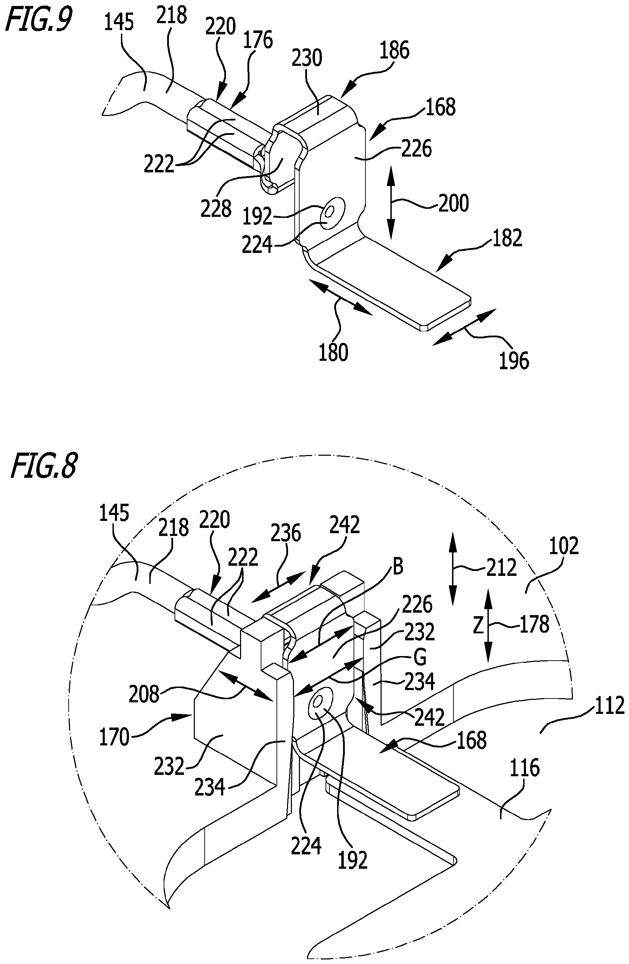

Eine in den Fig. 8 bis 10 dargestellte zweite Ausführungsform eines signalleitungssystemseitigen Positionierelements 168 und eines zugeordneten trägerelementseitigen Positionierelements 170 unterscheidet sich von der in den Fig. 5 bis 7 dargestellten ersten Ausführungsform dadurch, dass das signalleitungssystemseitige Positionierelement 168 derart mit dem trägerelementseitigen Positionierelement 170 verbunden ist, das es im verbundenen Zustand relativ zu dem trägerelementseitigen Positionierelement 170 in der Z-Richtung 178 des Zellkontaktierungssystems 100, in der Höhenrichtung 200 des signalleitungssystemseitigen Positionierelements 168 und in der Höhenrichtung 212 des trägerelementseitigen Positionierelements 170 verschiebbar ist.

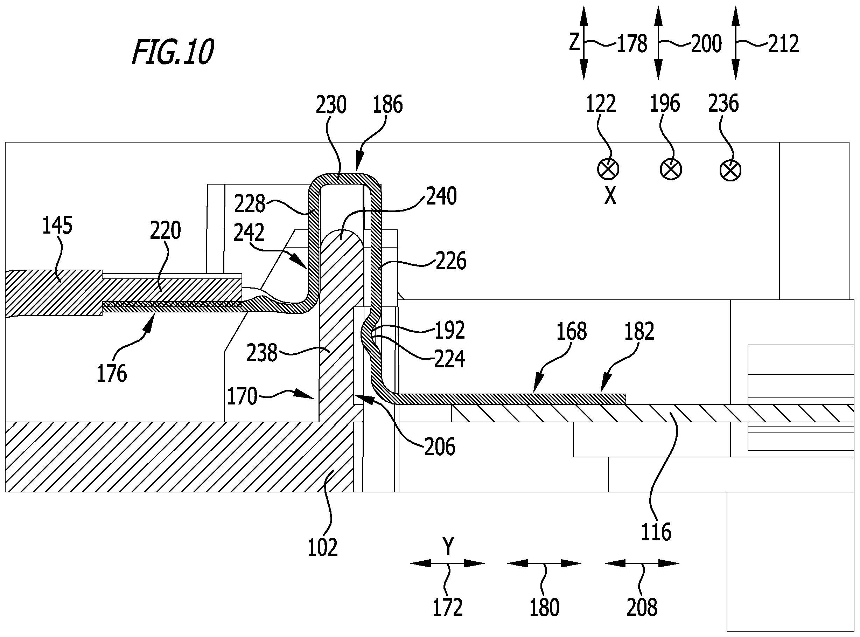

Dies wird dadurch erreicht, dass der Verbindungsbereich 186 des signalleitungssystemseitigen Positionierelements 168 bei dieser Ausführungsform, wie am besten aus Fig. 10 zu ersehen ist, ein Rastelement 192 aufweist, welches als eine zu dem trägerelementseitigen Positionierelement 170 hin vorspringende Rastnase 224 ausgebildet ist und in eine Rastaufnahme 206 an dem trägerelementseitigen Positionierelement 170 eingreift, welche in der Z-Richtung 178 eine größere Ausdehnung aufweist als das Rastelement 192.

Der elastisch und/oder plastisch verformbare Verformungsbereich 184 der ersten Ausführungsform des signalleitungssystemseitigen Positionierelements 168 kann bei dieser Ausführungsform entfallen.

Der Verbindungsbereich 186 des signalleitungssystemseitigen Positionierelements 168 weist bei dieser Ausführungsform beispielsweise einen im Wesentlichen U-förmigen (in der Längsrichtung 180 genommenen) Querschnitt auf (siehe Fig. 10), mit einem kontaktbereichseitigen Schenkel 226, einem anschlussbereichseitigen Schenkel 228 und einem die beiden Schenkel 226 und 228 miteinander verbindenden Steg 230.

Die beiden Schenkel 226 und 228 des Verbindungsbereichs 186 sind vorzugsweise im Wesentlichen parallel zur Höhenrichtung 200 des signalleitungssystemseitigen Positionierelements 168 ausgerichtet.

Das Rastelement 192 ist vorzugsweise an dem kontaktbereichseitigen Schenkel 226 angeordnet.

Der Steg 230 erstreckt sich vorzugsweise in der Querrichtung 196 und in der Längsrichtung 180 des signalleitungssystemseitigen Positionierelements 168.

Wie am besten aus den Fig. 8 und 10 zu ersehen ist, umfasst bei dieser Ausführungsform das trägerelementseitige Positionierelement 170 zwei Positioniervorsprünge 232, die an ihrer dem jeweils zugeordneten Zellverbinder 116 oder Stromanschluss 118 zugewandten Vorderseite mit jeweils einer sich in der Höhenrichtung 212 des trägerelementseitigen Positionierelements 170 erstreckenden Führungsleiste 234 versehen sind.

Die Führungsleisten 234 weisen in der Querrichtung 236 des trägerelementseitigen Positionierelements 170 einen Abstand G voneinander auf, welcher im Wesentlichen der Breite B des kontaktbereichseitigen Schenkels 226 des Verbindungsbereichs 186 des signalleitungssystemseitigen Positionierelements 168 entspricht, so dass das signalleitungssystemseitige Positionierelement 168 durch das trägerelementseitige Positionierelement 170 in der Querrichtung 196 in gewünschter Weise positioniert und in der Höhenrichtung 200 verschieblich geführt ist.

Der kontaktbereichseitige Schenkel 226 des Verbindungsbereichs 186 des signalleitungssystemseitigen Positionierelements 168 und die Führungsleisten 234 des trägerelementseitigen Positionierelements 170 bilden somit zusammen eine Führungsvorrichtung 242, durch welche das signalleitungssystemseitige Positionierelement 168 in der Z-Richtung 178 des Zellkontaktierungssystems 100 verschiebbar an dem trägerelementseitigen Positionierelement 170 geführt ist.

Wie am besten aus dem Längsschnitt der Fig. 10 zu ersehen ist, sind die beiden Positioniervorsprünge 232 des trägerelementseitigen Positionierelements 170 durch eine sich in der Querrichtung 236 erstreckende Verbindungswand 238 miteinander verbunden.

Die Rastaufnahme 206 des trägerelementseitigen Positionierelements 170 ist vorzugsweise an der dem kontaktbereichseitigen Schenkel 226 des Verbindungsbereichs 186 des signalleitungssystemseitigen Positionierelements 168 zugewandten Vorderseite der Verbindungswand 238 angeordnet.

Der oberhalb der Rastaufnahme 206 liegende obere Bereich 240 der Verbindungswand 238 bildet eine Hinterschneidung, welche die Bewegung des Rastelements 192 in der Höhenrichtung 200 begrenzt, so dass das signalleitungssystemseitige Positionierelement 168 unverlierbar an dem trägerelementseitigen Positionierelement 170 gehalten ist.

Die Erstreckung des Stegs 230 des Verbindungsbereichs 186 des signalleitungssystemseitigen Positionierelements 168 in der Längsrichtung 180 des signalleitungssystemseitigen Positionierelements 168 entspricht im Wesentlichen der Erstreckung des oberen Bereichs 240 der Verbindungswand 238 des trägerelementseitigen Positionierelements 170 in der Längsrichtung 208 des trägerelementseitigen Positionierelements 170 oder ist geringfügig größer als dieselbe, so dass das signalleitungssystemseitige Positionierelement 168 auch in seiner Längsrichtung 180 durch die zwischen den Schenkeln 226 und 228 des Verbindungsbereichs 186 eingeschlossene Verbindungswand 238 in gewünschter Weise positioniert ist.

Der Abstand zwischen dem Steg 230 und dem Rastelement 192 längs der Höhenrichtung 200 des signalleitungssystemseitigen Positionierelements 168 ist größer als die Ausdehnung des oberen Bereichs 240 der Verbindungswand 238 des trägerelementseitigen Positionierelements 170 in dessen Höhenrichtung 212, so dass der Verschiebungsweg des Rastelements 192 in der Rastaufnahme 206 nicht durch einen Kontakt zwischen dem Steg 230 und dem oberen Bereich 240 der Verbindungswand 238 begrenzt wird.

Im Übrigen stimmt die in den Fig. 8 bis 10 dargestellte zweite Ausführungsform eines signalleitungssystemseitigen Positionierelements 168 und eines trägerelementseitigen Positionierelements 170 hinsichtlich Aufbau, Funktion und Herstellungsweise mit der in den Fig. 5 bis 7 dargestellten ersten Ausführungsform überein, auf deren vorstehende Beschreibung insoweit Bezug genommen wird.

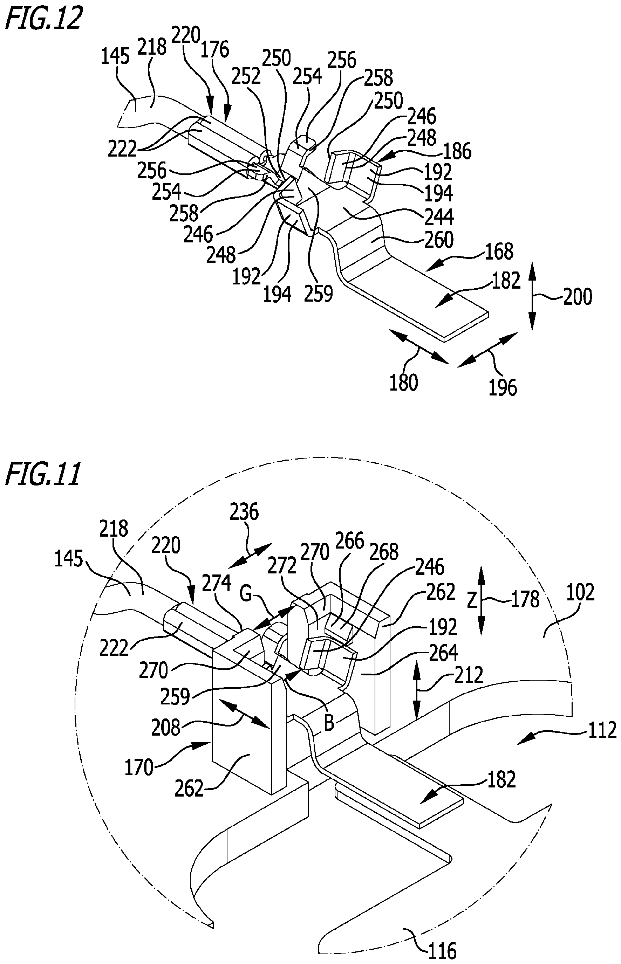

Eine in den Fig. 11 bis 13 dargestellte dritte Ausführungsform eines signalleitungssystemseitigen Positionierelements 168 und eines zugeordneten trägerelementseitigen Positionierelements 170 unterscheidet sich von der in Fig. 8 bis 10 dargestellten zweiten Ausführungsform hinsichtlich der Ausgestaltung des Verbindungsbereichs 186 des signalleitungssystemseitigen Positionierelements 168 und der Führungsvorrichtung 242.

Der Verbindungsbereich 186 umfasst bei dieser Ausführungsform einen Mittelabschnitt 244, von dessen Längsseiten sich Rastelemente 192, beispielsweise in Form von Rastzungen 194, weg erstrecken.

Diese Rastelemente 192 sind vorzugsweise sowohl gegenüber der Querrichtung 196 als auch gegenüber der Höhenrichtung 200 des signalleitungssystemseitigen Positionierelements 168 geneigt.

Von einem rückwärtigen, dem Anschlussbereich 176 zugewandten Ende jedes Rastelements 192 erstreckt sich jeweils ein vorderes Führungselement 246, beispielsweise in Form einer vorderen Führungslasche 248, so zu der Längsmittelebene des signalleitungssystemseitigen Positionierelements 168 hin, dass eine dem Anschlussbereich 176 zugewandte Rückseite 250 des jeweiligen Führungselements 246 im Wesentlichen parallel zur Querrichtung 196 und zur Höhenrichtung 200 ausgerichtet ist.

Ein hinterer Abschnitt 252 des Verbindungsbereichs 186 trägt zwei sich von dessen Längsseiten weg erstreckende hintere Führungselemente 254, beispielsweise in Form von hinteren Führungslaschen 256.

Die hinteren Führungselemente 254 sind vorzugsweise sowohl gegenüber der Querrichtung 196 als auch gegenüber der Höhenrichtung 200 des signalleitungssystemseitigen Positionierelements 168 geneigt.

Eine vordere Stirnfläche 258 jedes hinteren Führungselements 254, welche der Rückseite 250 jeweils eines vorderen Führungselements 246 zugewandt ist, verläuft vorzugsweise im Wesentlichen parallel zur Querrichtung 196 und zur Höhenrichtung 200 des signalleitungssystemseitigen Positionierelements 168.

Der hintere Abschnitt 252 und der Mittelabschnitt 244 des Verbindungsbereichs sind über einen Zwischenabschnitt 259 miteinander verbunden.

Der Mittelabschnitt 244 des Verbindungsbereichs 186 ist über einen im Längsschnitt S-förmig gebogenen Vorderabschnitt 260 des Verbindungsbereichs 186 mit dem Kontaktbereich 182 des signalleitungssystemseitigen Positionierelements 168 verbunden.

Wie am besten aus Fig. 11 zu ersehen ist, umfasst das trägerelementseitige Positionierelement 170 bei dieser Ausführungsform zwei Positioniervorsprünge 262, die in der Querrichtung 236 voneinander beabstandet sind und an ihren einander zugewandten Innenseiten 264 jeweils ein Rastelement 266, beispielweise in Form einer Rastnase 268, tragen, welches den Verschiebungsweg des jeweils zugeordneten Rastelements 192 des signalleitungssystemseitigen Positionierelements 168 in der Z-Richtung 178 des Zellkontaktierungssystems 100 begrenzt, so dass das signalleitungssystemseitige Positionierelement 168 unverlierbar an dem trägerelementseitigen Positionierelement 170 gehalten ist.

Ferner umfasst das trägerelementseitige Positionierelement 170 bei dieser Ausführungsform zwei Führungsleisten 270, welche sich von jeweils einem der Positioniervorsprünge 162 aus aufeinander zu erstrecken und in einem Abstand G längs der Querrichtung 236 des trägerelementseitigen Positionierelements 170 voneinander enden, welcher der Breite B, also der Erstreckung in der Querrichtung 196, des Zwischenabschnitts 259 des Verbindungsbereichs 186 des signalleitungssystemseitigen Positionierelements 168 entspricht, welcher sich im montierten Zustand des Zellkontaktierungssystems 100 zwischen den Führungsleisten 270 hindurch erstreckt, so dass das signalleitungssystemseitige Positionierelement 168 in der Querrichtung 196 relativ zu dem trägerelementseitigen Positionierelement 170 in der gewünschten Weise positioniert ist.

Ferner liegen die vorderen Führungselemente 246 des signalleitungssystemseitigen Positionierelements 168 an einer denselben zugewandten Vorderseite 272 der Führungsleisten 270 und die hinteren Führungselemente 254 des signalleitungssystemseitigen Positionierelements 168 an einer denselben zugewandten Rückseite 274 der Führungsleisten 270 an, so dass durch das Zusammenwirken der Führungselemente 246 und 254 des signalleitungssystemseitigen Positionierelements 168 und der Führungsleisten 270 des trägerelementseitigen Positionierelements 170 das signalleitungssystemseitige Positionierelement 168 auch in dessen Längsrichtung 180 in gewünschter Weise relativ zu dem trägerelementseitigen Positionierelement 170 positioniert ist.

Dabei bilden die vorderen Führungselemente 246, die hinteren Führungselemente 254 und die Führungsleisten 270 zusammen die Führungsvorrichtung 242, durch welche das signalleitungssystemseitige Positionierelement 168 in der Z-Richtung 178 verschiebbar an dem trägerelementseitigen Positionierelement 170 geführt ist.

Im Übrigen stimmt die in den Fig. 11 bis 13 dargestellte dritte Ausführungsform eines signalleitungssystemseitigen Positionierelements 168 und eines trägerelementseitigen Positionierelements 170 hinsichtlich Aufbau, Funktion und Herstellungsweise mit der in den Fig. 8 bis 10 dargestellten zweiten Ausführungsform überein, auf deren vorstehende Beschreibung insoweit Bezug genommen wird.

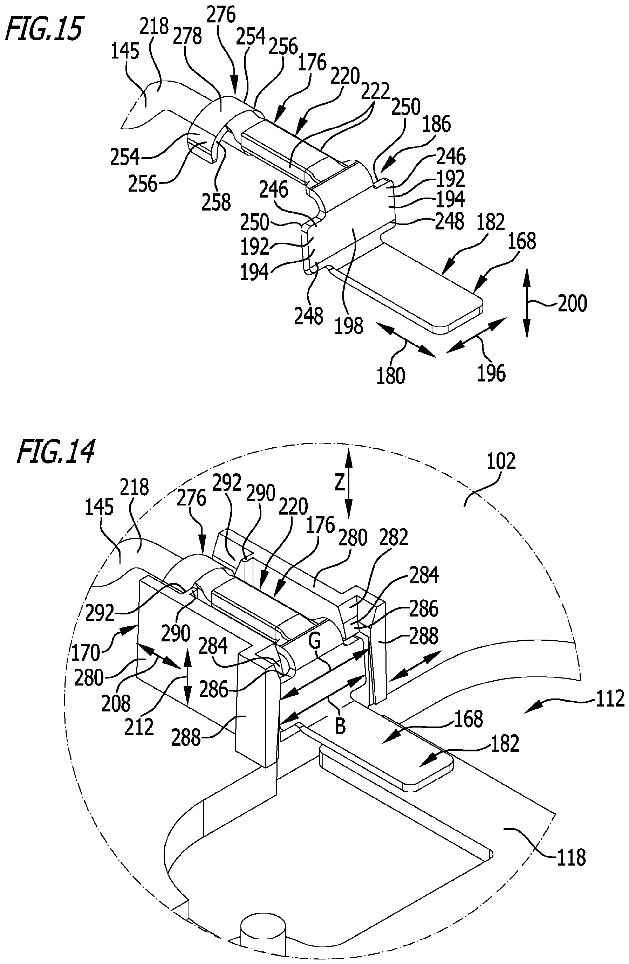

Eine in den Fig. 14 bis 16 dargestellte vierte Ausführungsform eines signalleitungssystemseitigen Positionierelements 168 und eines zugeordneten trägerelementseitigen Positionierelements 170 unterscheidet sich von der in Fig. 11 bis 13 dargestellten dritten Ausführungsform durch die Ausbildung der Führungsvorrichtung 242 sowie die Ausbildung der Rastelemente am signalleitungssystemseitigen Positionierelement 168 und am trägerelementseitigen Positionierelement 170.

Wie am besten aus Fig. 15 zu ersehen ist, folgt bei dieser Ausführungsform des signalleitungssystemseitigen Positionierelements 168 auf den Kontaktbereich 182 ein im Längsschnitt längs der Längsrichtung 180 S-förmiger Verbindungsbereich 186 mit einem Mittelabschnitt 198, der sich in der Höhenrichtung 200 erstreckt, und mit zwei Rastelementen 192, beispielsweise in Form von Rastzungen 194, die sich in der Querrichtung 196 von dem Mittelabschnitt 198 weg erstrecken.

Die Rastelemente 192 bilden zugleich vordere Führungselemente 246, beispielsweise in Form von vorderen Führungslaschen 248, deren Rückseiten 250 im Wesentlichen parallel zur Höhenrichtung 200 und im Wesentlichen parallel zur Querrichtung 196 ausgerichtet sind.

Auf seiner dem Kontaktbereich 182 abgewandten Seite schließt sich an den Verbindungsbereich 186 ein Anschlussbereich 176 an, an dem ein, vorzugsweise abisolierter, Endabschnitt 220 der Signalleitung 145 elektrisch leitend festgelegt ist, insbesondere durch Vercrimpung mittels an dem Anschlussbereich 176 vorgesehener Crimpelemente 222.

An das dem Verbindungsbereich 186 abgewandte Ende des Anschlussbereichs 176 schließt sich in der Längsrichtung 180 ein Führungsbereich 276 an, welcher zwei hintere Führungselemente 254, beispielsweise in Form von hinteren Führungslaschen 256, aufweist, die sich von einem zentralen Abschnitt 278 des Führungsbereichs 276 aus in der Querrichtung 196 erstrecken.

Vorzugsweise sind die hinteren Führungselemente 254 gekrümmt ausgebildet. Die vorderen Stirnflächen 280 der hinteren Führungselemente 254 sind vorzugsweise im Wesentlichen parallel zur Höhenrichtung 200 und zur Querrichtung 196 des signalleitungssystemseitigen Positionierelements 168 ausgerichtet.

Das trägerelementseitige Positionierelement 170 umfasst bei dieser Ausführungsform zwei sich in der Längsrichtung 208 des trägerelementseitigen Positionierelements 170 und in dessen Höhenrichtung 212 erstreckende Positioniervorsprünge 280, die in der Querrichtung 236 voneinander beabstandet sind.

Jeder Positioniervorsprung 280 endet an einer vorderen Stirnwand 282, welche sich in der Querrichtung 236 erstreckt und an ihrer dem jeweils zugeordneten Zellverbinder 116 oder Stromanschluss 118 zugewandten Vorderseite mit einem Rastelement 284, beispielsweise in Form einer Rastnase 286, versehen ist, welches die Bewegung des jeweils zugeordneten Rastelements 192 des signalleitungssystemseitigen Positionierelements 168 in der Z-Richtung 178 nach oben begrenzt, so dass das signalleitungssystemseitige Positionierelement 168 unverlierbar an dem trägerelementseitigen Positionierelement 170 gehalten ist.

Von einem Ende jeder vorderen Stirnwand 282 aus erstreckt sich in der Längsrichtung 208 jeweils eine vordere Führungsleiste 288 nach vorne.

Die vorderen Führungselemente 246 des signalleitungssystemseitigen Positionierelements 168 sind seitlich an den vorderen Führungsleisten 288 des trägerelementseitigen Positionierelements 170 in der Z-Richtung 178 des Zellkontaktierungssystems 100 verschiebbar geführt.

Der Abstand G zwischen den vorderen Führungsleisten 288 in der Querrichtung 236 des trägerelementseitigen Positionierelements 170 entspricht der Breite B des signalleitungssystemseitigen Positionierelements 168 im Bereich der vorderen Führungselemente 246, so dass das signalleitungssystemseitige Positionierelement 168 durch das trägerelementseitige Positionierelement 170 längs der Querrichtung 196 in gewünschter Weise positioniert ist.

Ferner umfasst das trägerelementseitige Positionierelement 170 bei dieser Ausführungsform zwei hintere Führungsleisten 290, die sich im Bereich zwischen dem Anschlussbereich 176 und den hinteren Führungselementen 254 des signalleitungssystemseitigen Positionierelements 168 von den Positioniervorsprüngen 280 ausgehend aufeinander zu erstrecken.

Die vorderen Stirnflächen 258 der hinteren Führungselemente 254 des signalleitungssystemseitigen Positionierelements 168 liegen dabei an den den vorderen Führungsleisten 288 abgewandten Rückseiten 292 der hinteren Führungsleisten 292 an, so dass durch das Zusammenwirken der vorderen Führungselemente 246 und der hinteren Führungselemente 254 des signalleitungssystemseitigen Positionierelements 168 mit den vorderen Führungsleisten 288 beziehungsweise mit den hinteren Führungsleisten 290 des trägerelementseitigen Positionierelements 170 das signalleitungssystemseitige Positionierelement 168 mittels des trägerelementseitigen Positionierelements 170 auch in der Längsrichtung 180 in gewünschter Weise positioniert ist.

Im Übrigen stimmt die in den Fig. 14 bis 16 dargestellte vierte Ausführungsform eines signalleitungssystemseitigen Positionierelements 168 und eines trägerelementseitigen Positionierelements 170 hinsichtlich Aufbau, Funktion und Herstellungsweise mit der in den Fig. 11 bis 13 dargestellten dritten Ausführungsform überein, auf deren vorstehende Beschreibung insoweit Bezug genommen wird.

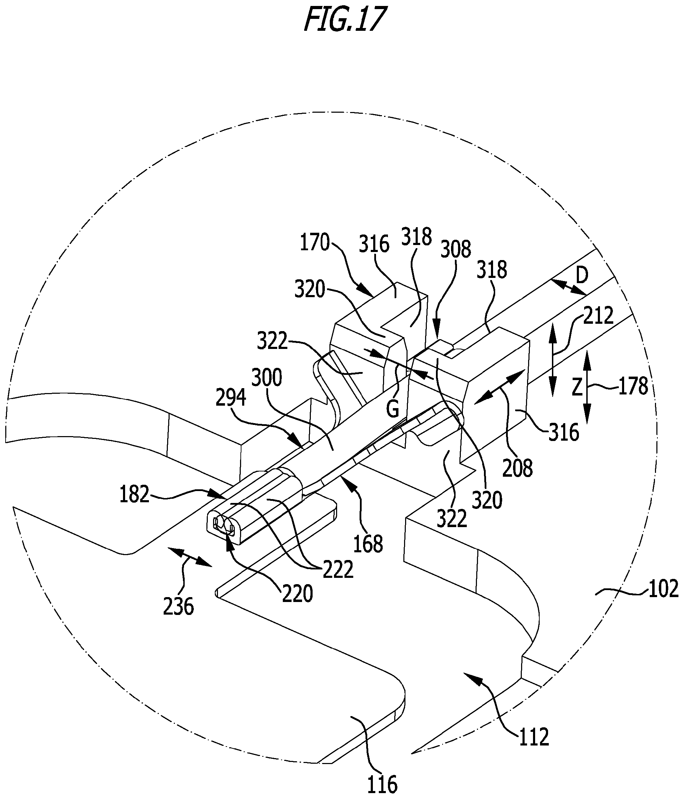

Eine in den Fig. 17 bis 19 dargestellte fünfte Ausführungsform eines signalleitungssystemseitigen Positionierelements 168 und eines zugeordneten trägerelementseitigen Positionierelements 170 unterscheidet sich von den vorstehend beschriebenen Ausführungsformen dadurch, dass der Endabschnitt 220 der Signalleitung 145 nicht in einem im montierten Zustand des Zellkontaktierungssystems 100 von dem jeweils zugeordneten Zellverbinder 116 oder Stromanschluss 118 beabstandeten Anschlussbereich 176, sondern im Kontaktbereich 182 des signalleitungssystemseitigen Positionierelements 168 elektrisch leitend mit dem signalleitungssystemseitigen Positionierelement 168 verbunden ist.

Hierfür weist der Kontaktbereich 182 des signalleitungssystemseitigen Positionierelements 168 bei dieser Ausführungsform Crimpelemente 222 auf, mittels welcher der (vorzugsweise abisolierte) Endabschnitt 220 der Signalleitung 145 durch Crimpung an dem Kontaktbereich 182 festlegbar ist.

Bei dieser Ausführungsform wird der Kontaktbereich 182 mit dem durch Crimpung daran festgelegten Endabschnitt 220 der Signalleitung 145 elektrisch leitend mit dem jeweils zugeordneten Zellverbinder 116 oder Stromanschluss 118 verbunden, beispielsweise durch Verschweißung, insbesondere Ultraschallschweißung, Laserschweißung oder Widerstandsschweißung, oder durch Verlötung.

An ein rückwärtiges Ende des Kontaktbereichs 182 schließt sich bei dieser Ausführungsform des signalleitungssystemseitigen Positionierelements 168 längs der Längsrichtung 180 ein vorderer Führungsbereich 294 an, welcher einen Mittelabschnitt 296 und hiervon seitlich abstehende vordere Führungselemente 248, beispielsweise in Form von vorderen Führungslaschen 248, umfasst.

Der Mittelabschnitt 296 ist in einem (längs der Querrichtung 196 genommenen) Querschnitt vorzugsweise konkav gekrümmt oder V-förmig ausgebildet und bildet somit einen Aufnahmekanal 298, in dem ein an den Endabschnitt 220 anschließender Abschnitt 300 der Signalleitung 145, welcher vorzugsweise mit einer elektrisch isolierenden Umhüllung 218 versehen ist, zumindest teilweise aufgenommen ist.

Die vorderen Führungselemente 246 weisen bei dieser Ausführungsform eine gewinkelte Form auf, mit einem gegenüber der Höhenrichtung 200 und gegenüber der Querrichtung 196 geneigten vorderen Abschnitt 302 und mit einem quer, vorzugsweise im Wesentlichen senkrecht, zu dem vorderen Abschnitt 302 ausgerichteten hinteren Abschnitt 304, dessen dem Kontaktbereich 186 abgewandte Rückseite 306 im Wesentlichen parallel zur Querrichtung 196 und zur Höhenrichtung 200 ausgerichtet ist.

An das dem Kontaktbereich 182 abgewandte hintere Ende des vorderen Führungsbereichs 294 schließt sich ein hinterer Führungsbereich 308 an.

Der hintere Führungsbereich 308 umfasst einen zentralen Abschnitt 310, von welchem in seitlicher Richtung zwei Crimpelemente 312 abstehen, welche die Signalleitung 145 bogenförmig umgeben und zwischen sich einschließen, so dass der mit der elektrisch isolierenden Umhüllung 218 versehene Abschnitt 300 der Signalleitung 145 durch Crimpung (sogenannte Iso-Crimpung) an dem hinteren Führungsbereich 308 des signalleitungssystemseitigen Positionierelements 168 festgelegt ist.

Die vorderen Stirnseiten 314 der Crimpelemente 312 sind im Wesentlichen parallel zur Höhenrichtung 200 und zur Querrichtung 196 ausgerichtet.

Das in Fig. 17 dargestellte trägerelementseitige Positionierelement 170 umfasst bei dieser Ausführungsform zwei Positioniervorsprünge 316, die in der Querrichtung 236 des trägerelementseitigen Positionierelements 170 voneinander beabstandet sind.

Von den einander zugewandten Innenseiten 318 der Positioniervorsprünge 316 springen Führungsleisten 320 vor.

Der Abstand G zwischen den freien Enden der Führungsleisten 320 längs der Querrichtung 236 des trägerelementseitigen Positionierelements 170 entspricht dem Durchmesser D des mit der elektrisch isolierenden Umhüllung 218 versehenen Abschnitts 300 der Signalleitung 145, so dass die Signalleitung 145 und das daran festgelegte signalleitungssystemseitige Positionierelement 168 durch das trägerelementseitige Positionierelement 170 längs der Querrichtung 196 in der gewünschten Weise positioniert sind.

Ferner liegen die Rückseiten 306 der vorderen Führungselemente 246 des signalleitungssystemseitigen Positionierelements 168 im montierten Zustand des Zellkontaktierungssystems 100 an dem jeweils zugeordneten Zellverbinder 116 oder Stromanschluss 118 zugewandten Vorderseiten 322 der Positioniervorsprünge 316 und der Führungsleisten 320 an.

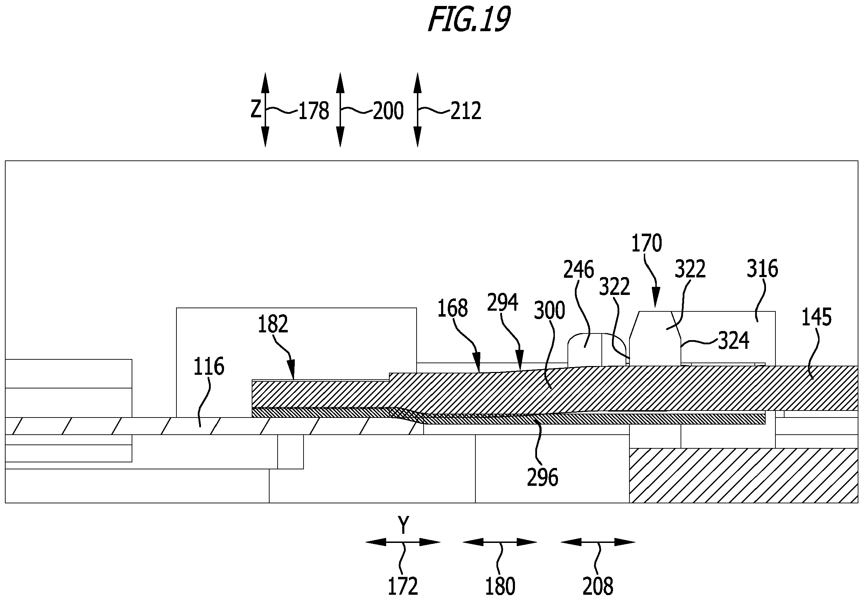

Die vorderen Stirnseiten 314 der Crimpelemente 312 liegen an den Vorderseiten 322 der Führungsleisten 320 abgewandten Rückseiten 324 (siehe Fig. 19) der Führungsleisten 320 an.

Die Crimpelemente 312 dienen somit als hintere Führungselemente 254 des signalleitungssystemseitigen Positionierelements 168.

Durch das Anliegen der vorderen Führungselemente 246 und der hinteren Führungselemente 254 des signalleitungssystemseitigen Positionierelements 168 an den Vorderseiten 322 beziehungsweise an den Rückseiten 324 der Führungsleisten 320 des trägerelementseitigen Positionierelements 170 ist das signalleitungssystemseitige Positionierelement 168 relativ zu dem trägerelementseitigen Positionierelement 170 auch längs der Längsrichtung 180 in gewünschter Weise positioniert.

Dabei ist das signalleitungssystemseitige Positionierelement 168 zugleich in der Z-Richtung 178 des Zellkontaktierungssystems 100 verschiebbar an dem trägerelementseitigen Positionierelement 170 geführt.

Im Übrigen stimmt die in den Fig. 17 bis 19 dargestellte fünfte Ausführungsform eines signalleitungssystemseitigen Positionierelements 168 und eines trägerelementseitigen Positionierelements 170 hinsichtlich Aufbau, Funktion und Herstellungsweise mit der in den Fig. 5 bis 7 dargestellten ersten Ausführungsform überein, auf deren vorstehende Beschreibung insoweit Bezug genommen wird.

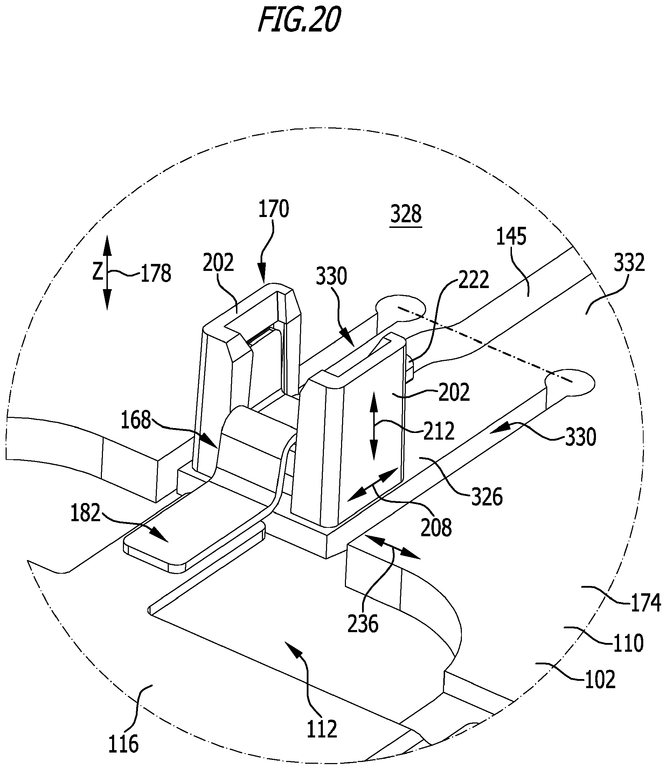

Eine in Fig. 20 dargestellte sechste Ausführungsform eines signalleitungssystemseitigen Positionierelements 168 und eines zugeordneten trägerelementseitigen Positionierelements 170 unterscheidet sich von der in den Fig. 5 bis 7 dargestellten ersten Ausführungsform dadurch, dass das trägerelementseitige Positionierelement 170 an einem Trägerabschnitt 326 angeordnet ist, der mit einem Grundkörper 328 des Trägerelements 102, welcher den jeweils zugeordneten Zellverbinder 116 oder Stromanschluss 118 trägt, derart verbunden ist, dass der Trägerabschnitt 326 mit dem daran angeordneten trägerelementseitigen Positionierelement 170 relativ zu dem Grundkörper 328 des Trägerelements 102 in der Z-Richtung 178 des Zellkontaktierungssystems 100 bewegbar ist.

Insbesondere kann vorgesehen sein, dass der Trägerabschnitt 326 durch - vorzugsweise in der Längsrichtung 208 des trägerelementseitigen Positionierelements 170 verlaufende - Ausnehmungen 330 auf zwei einander gegenüberliegenden Seiten des Trägerabschnitt 326 von dem Grundkörper 328 getrennt und nur an einer Seite mit dem Grundkörper 328 (vorzugsweise einstückig) verbunden ist, so dass der Trägerabschnitt 326 um die Verbindungslinie 332 zwischen den Endpunkten der Ausnehmungen 330 relativ zu dem Grundkörper 328 (vorzugsweise elastisch federnd) schwenkbar ist, wobei diese Schwenkbewegung eine Komponente in der Z-Richtung 178 aufweist.

Hierdurch wird unabhängig von der Verformbarkeit des Verformungsbereichs 184 des signalleitungssystemseitigen Positionierelements 168 eine Möglichkeit zur Bewegung des Kontaktbereichs 182 relativ zu dem Grundkörper 328 des Trägerelements 102 längs der Z-Richtung 178 und somit eine Möglichkeit zum Toleranzausgleich geschaffen.

Auf den Verformungsbereich 184 des signalleitungssystemseitigen Positionierelements 168 könnte daher bei dieser Ausführungsform auch verzichtet werden.

Im Übrigen stimmt die in Fig. 20 dargestellte sechste Ausführungsform eines signalleitungssystemseitigen Positionierelements 168 und eines trägerelementseitigen Positionierelements 170 hinsichtlich Aufbau, Funktion und Herstellungsweise mit der in den Fig. 5 bis 7 dargestellten ersten Ausführungsform überein, auf deren vorstehende Beschreibung insoweit Bezug genommen wird.

## Patentansprüche

1. Zellkontaktierungssystem für eine elektrochemische Vorrichtung (111), die mehrere elektrochemische Zellen (113) und ein Stromleitungssystem (104) umfasst, wobei das Zellkontaktierungssystem (100)
ein Signalleitungssystem (106) mit einer oder mehreren Signalleitungen (145) zum elektrisch leitenden Verbinden jeweils einer Signalquelle (154) mit einem Signalleitungsanschluss (144) oder mit einer Überwachungsvorrichtung des Zellkontaktierungssystems (100) und
ein Trägerelement (102), welches das Signalleitungssystem (106) trägt, umfasst,
wobei das Stromleitungssystem (104) ein Bestandteil des Zellkontaktierungssystems (100) ist und das Trägerelement (102) das Stromleitungssystem (104) trägt,
wobei das Zellkontaktierungssystem (100) mindestens ein signalleitungssystemseitiges Positionierelement (168), das an einer Signalleitung (145) des Signalleitungssystems (106) festgelegt ist, und mindestens ein trägerelementseitiges Positionierelement (170), das an dem Trägerelement (102) festgelegt ist,
umfasst,
wobei das signalleitungssystemseitige Positionierelement (168) so mit dem trägerelementseitigen Positionierelement (170) verbunden ist, dass das signalleitungssystemseitige Positionierelement (168) in einer gewünschten Position relativ zu einem Zellverbinder (116) oder einem Stromanschluss (118) des Stromleitungssystems (104) positioniert ist, wobei das signalleitungssystemseitige Positionierelement (168) an dem zugeordneten Zellverbinder (116) oder Stromanschluss (118) festgelegt ist, und
wobei die Zellverbinder (116) in einer X-Richtung (122) und/oder in einer Y-Richtung (172) des Zellkontaktierungssystems (100) nebeneinander und im montierten Zustand des Zellkontaktierungssystems (100) in einer Z-Richtung (178) über den Zellterminals (115) der miteinander zu verbindenden elektrochemischen Zellen (113) angeordnet sind,
wobei die X-Richtung (122), die Y-Richtung (172) und die Z-Richtung (178) paarweise senkrecht zueinander ausgerichtet sind,
**dadurch gekennzeichnet,**
**dass** das signalleitungssystemseitige Positionierelement (168) einen Kontaktbereich (182), mit dem das signalleitungssystemseitige Positionierelement (168) an dem zugeordneten Zellverbinder (116) oder Stromanschluss (118) festgelegt ist,
einen Anschlussbereich (176), mit dem das signalleitungssystemseitige Positionierelement (168) an der zugeordneten Signalleitung (145) festgelegt ist, und
einen zwischen dem Kontaktbereich (182) und dem Anschlussbereich (176) angeordneten Verformungsbereich (184) umfasst,
wobei der Verformungsbereich (184) derart verformbar ist, dass der Kontaktbereich (182) des signalleitungssystemseitigen Positionierelements (168) relativ zu dem Anschlussbereich (176) längs der Z-Richtung (178) bewegbar ist.

2. Zellkontaktierungssystem nach Anspruch 1, **dadurch gekennzeichnet, dass** das signalleitungssystemseitige Positionierelement (168) durch Verschweißung, Verlötung, Crimpung, Vernietung und/oder Verschraubung an dem zugeordneten Zellverbinder (116) oder Stromanschluss (118) festgelegt ist.

3. Zellkontaktierungssystem nach einem der Ansprüche 1 oder 2, **dadurch gekennzeichnet, dass** das signalleitungssystemseitige Positionierelement (168) durch Verschweißung, Verlötung, Crimpung, Isolationscrimpung und/oder Vernietung an der zugeordneten Signalleitung (145) festgelegt ist.

4. Zellkontaktierungssystem nach einem der Ansprüche 1 bis 3, **dadurch gekennzeichnet, dass** die Signalleitung (145) mehrere Einzelleiter umfasst.

5. Zellkontaktierungssystem nach einem der Ansprüche 1 bis 4, **dadurch gekennzeichnet, dass** die dem signalleitungssystemseitigen Positionierelement (168) zugeordnete Signalleitung (145) an einem von dem zugeordneten Zellverbinder (116) oder Stromanschluss (118) beabstandeten Anschlussbereich (176) des signalleitungssystemseitigen Positionierelements (168) festgelegt ist.

6. Zellkontaktierungssystem nach einem der Ansprüche 1 bis 5, **dadurch gekennzeichnet, dass** die dem signalleitungssystemseitigen Positionierelement (168) zugeordnete Signalleitung (145) an einem an dem zugeordneten Zellverbinder (116) oder Stromanschluss (118) anliegenden Kontaktbereich (182) des signalleitungssystemseitigen Positionierelements (168) festgelegt ist.

7. Zellkontaktierungssystem nach einem der Ansprüche 1 bis 6, **dadurch gekennzeichnet, dass** das trägerelementseitige Positionierelement (170) aus einem elektrisch isolierenden Material gebildet ist.

8. Zellkontaktierungssystem nach einem der Ansprüche 1 bis 7, **dadurch gekennzeichnet, dass** das trägerelementseitige Positionierelement (170) einstückig mit dem Trägerelement (102) ausgebildet ist.

9. Zellkontaktierungssystem nach einem der Ansprüche 1 bis 8, **dadurch gekennzeichnet, dass** das signalleitungssystemseitige Positionierelement (168) mit dem trägerelementseitigen Positionierelement (170) durch Verrastung, Verstemmung und/oder Verklemmung verbunden ist.

10. Zellkontaktierungssystem nach einem der Ansprüche 1 bis 9, **dadurch gekennzeichnet, dass** ein Kontaktbereich (182) des signalleitungssystemseitigen Positionierelements (168), mit dem das signalleitungssystemseitige Positionierelement (168) an dem zugeordneten Zellverbinder (116) oder Stromanschluss (118) festgelegt ist, längs der Z-Richtung (178) relativ zu dem trägerelementseitigen Positionierelement (170) verschiebbar an dem trägerelementseitigen Positionierelement (170) gehalten ist.

11. Zellkontaktierungssystem nach einem der Ansprüche 1 bis 10, **dadurch gekennzeichnet, dass** das trägerelementseitige Positionierelement (170) an einem Trägerabschnitt (326) des Trägerelements (102) angeordnet ist, wobei der Trägerabschnitt (326) mit einem Grundkörper (328) des Trägerelements (102) derart verbunden ist, dass der Trägerabschnitt (326) mit dem trägerelementseitigen Positionierelement (170) relativ zu dem Grundkörper (328) des Trägerelements (102) längs der Z-Richtung (178) bewegbar ist.

12. Elektrochemische Vorrichtung, umfassend mehrere elektrochemische Zellen (113) und ein Zellkontaktierungssystem (100) nach einem der Ansprüche 1 bis 11.

13. Verfahren zum Herstellen eines Zellkontaktierungssystems (100) für eine elektrochemische Vorrichtung (111), die mehrere elektrochemische Zellen (113) und ein Stromleitungssystem (104) umfasst, umfassend Folgendes:
- Herstellen eines Signalleitungssystems (106) mit einer oder mehreren Signalleitungen (145) zum elektrisch leitenden Verbinden jeweils einer Signalquelle (154) mit einem Signalleitungsanschluss (144) oder einer Überwachungsvorrichtung des Zellkontaktierungssystems (100);
wobei das Signalleitungssystem (106) im montierten Zustand des Zellkontaktierungssystems (100) von einem Trägerelement (102) des Zellkontaktierungssystems (100) getragen wird,
- Festlegen einer Signalleitung (145) des Signalleitungssystems (106) an einem signalleitungssystemseitigen Positionierelement (168);
- Verbinden des signalleitungssystemseitigen Positionierelements (168) mit einem trägerelementseitigen Positionierelement (170), das an dem Trägerelement (102) festgelegt ist, so dass das signalleitungssystemseitige Positionierelement (168) in einer gewünschten Position relativ zu einem Zellverbinder (116) oder einem Stromanschluss (118) des Stromleitungssystems (104) positioniert ist;
- Festlegen des signalleitungssystemseitigen Positionierelements (168) an dem zugeordneten Zellverbinder (116) oder Stromanschluss (118);
wobei die Zellverbinder (116) in einer X-Richtung (122) und/oder in einer Y-Richtung (172) des Zellkontaktierungssystems (100) nebeneinander und im montierten Zustand des Zellkontaktierungssystems (100) in einer Z-Richtung (178) über den Zellterminals (115) der miteinander zu verbindenden elektrochemischen Zellen (113) angeordnet sind,
wobei die X-Richtung (122), die Y-Richtung (172) und die Z-Richtung (178) paarweise senkrecht zueinander ausgerichtet sind,
**dadurch gekennzeichnet,**
**dass** das signalleitungssystemseitige Positionierelement (168) einen Kontaktbereich (182), mit dem das signalleitungssystemseitige Positionierelement (168) an dem zugeordneten Zellverbinder (116) oder Stromanschluss (118) festgelegt ist,
einen Anschlussbereich (176), mit dem das signalleitungssystemseitige Positionierelement (168) an der zugeordneten Signalleitung (145) festgelegt ist, und
einen zwischen dem Kontaktbereich (182) und dem Anschlussbereich (176) angeordneten Verformungsbereich (184) umfasst,
wobei der Verformungsbereich (184) derart verformbar ist, dass der Kontaktbereich (182) des signalleitungssystemseitigen Positionierelements (168) relativ zu dem Anschlussbereich (176) längs der Z-Richtung (178) bewegbar ist.

14. Verfahren nach Anspruch 13, **dadurch gekennzeichnet, dass** das trägerelementseitige Positionierelement (170) nach dem Festlegen des signalleitungssystemseitigen Positionierelements (168) an dem Zellverbinder (116) oder dem Stromanschluss (118) von dem Trägerelement (102) und/oder von dem signalleitungssystemseitigen Positionierelement (168) gelöst wird.

## Claims

1. Cell contacting system for an electro-chemical device (111) which comprises a plurality of electro-chemical cells (113) and a current line system (104), wherein the cell contacting system (100) comprises
a signal line system (106) having one or more signal lines (145) for connecting a respective signal source (154) to a signal line termination (144) or to a monitoring device of the cell contacting system (100) in electrically conductive manner and
a carrier element (102) which carries the signal line system (106), wherein the current line system (104) is a component of the cell contacting system (100) and the carrier element (102) carries the current line system (104),
wherein the cell contacting system (100) comprises at least one signal-line-system-side positioning element (168) which is fixed to a signal line (145) of the signal line system (106), and at least one carrier-element-side positioning element (170) which is fixed to the carrier element (102), wherein the signal-line-system-side positioning element (168) is connected to the carrier-element-side positioning element (170) in such a way that the signal-line-system-side positioning element (168) is positioned in a desired position relative to a cell connector (116) or a current termination (118) of the current line system (104),
wherein the signal-line-system-side positioning element (168) is fixed to the associated cell connector (116) or current termination (118), and wherein the cell connectors (116) are arranged next to each other in an X-direction (122) and/or in a Y-direction (172) of the cell contacting system (100) and are arranged over the cell terminals (115) of the electro-chemical cells (113) that are to be connected to one another in a Z-direction (178) in the assembled state of the cell contacting system (100), wherein the X-direction (122), the Y-direction (172) and the Z-direction (178) are oriented perpendicularly to each other in pairs,
**characterized in that**
the signal-line-system-side positioning element (168) comprises a contact region (182) by means of which the signal-line-system-side positioning element (168) is fixed to the associated cell connector (116) or current termination (118),
a terminal region (176) by means of which the signal-line-system-side positioning element (168) is fixed to the associated signal line (145), and a deformation region (184) which is arranged between the contact region (182) and the terminal region (176),
wherein the deformation region (184) is deformable in such a way that the contact region (182) of the signal-line-system-side positioning element (168) is movable relative to the terminal region (176) along the Z-direction (178).

2. Cell contacting system in accordance with Claim 1, **characterized in that** the signal-line-system-side positioning element (168) is fixed to the associated cell connector (116) or current termination (118) by welding, soldering, crimping, riveting and/or a screw connection.

3. Cell contacting system in accordance with either of Claims 1 or 2, **characterized in that** the signal-line-system-side positioning element (168) is fixed to the associated signal line (145) by welding, soldering, crimping, insulation-crimping and/or riveting.

4. Cell contacting system in accordance with any of the Claims 1 to 3, **characterized in that** the signal line (145) comprises a plurality of individual conductors.

5. Cell contacting system in accordance with any of the Claims 1 to 4, **characterized in that** the signal line (145) associated with the signal-line-system-side positioning element (168) is fixed to a terminal region (176) of the signal-line-system-side positioning element (168) which is spaced from the associated cell connector (116) or current termination (118).

6. Cell contacting system in accordance with any of the Claims 1 to 5, **characterized in that** the signal line (145) associated with the signal-line-system-side positioning element (168) is fixed to a contact region (182) of the signal-line-system-side positioning element (168) which abuts on the associated cell connector (116) or current termination (118).

7. Cell contacting system in accordance with any one of the Claims 1 to 6, **characterized in that** the carrier-element-side positioning element (170) is formed of an electrically conductive material.

8. Cell contacting system in accordance with any of the Claims 1 to 7, **characterized in that** the carrier-element-side positioning element (170) is formed in one piece with the carrier element (102).

9. Cell contacting system in accordance with any of the Claims 1 to 8, **characterized in that** the signal-line-system-side positioning element (168) is connected to the carrier-element-side positioning element (170) by latching, caulking and/or clamping.

10. Cell contacting system in accordance with any one of the Claims 1 to 9, **characterized in that** a contact region (182) of the signal-line-system-side positioning element (168), by means of which the signal-line-system-side positioning element (168) is fixed to the associated cell connector (116) or current termination (118), is held on the carrier-element-side positioning element (170) such as to be displaceable relative to the carrier-element-side positioning element (170) along the Z-direction (178).

11. Cell contacting system in accordance with any of the Claims 1 to 10, **characterized in that** the carrier-element-side positioning element (170) is arranged on a carrier section (326) of the carrier element (102), wherein the carrier section (326) is connected to a base body (328) of the carrier element (102) in such a way that the carrier section (326) together with the carrier-element-side positioning element (170) is movable relative to the base body (328) of the carrier element (102) along the Z-direction (178).

12. Electro-chemical device, comprising a plurality of electro-chemical cells (113) and a cell contacting system (100) in accordance with any one of the Claims 1 to 11.

13. Method of manufacturing a cell contacting system (100) for an electro-chemical device (111) which comprises a plurality of electro-chemical cells (113) and a current line system (104), comprising the following:
- producing a signal line system (106) having one or more signal lines (145) for connecting a respective signal source (154) to a signal line termination (144) or a monitoring device of the cell contacting system (100) in electrically conductive manner;
wherein the signal line system (106) is carried by a carrier element (102) of the cell contacting system (100) in the assembled state of the cell contacting system (100),
- fixing a signal line (145) of the signal line system (106) to a signal-line-system-side positioning element (168);
- connecting the signal-line-system-side positioning element (168) to a carrier-element-side positioning element (170) which is fixed to the carrier element (102) so that the signal-line-system-side positioning element (168) is positioned in a desired position relative to a cell connector (116) or a current termination (118) of the current line system (104);
- fixing the signal-line-system-side positioning element (168) to the associated cell connector (116) or current termination (118);
wherein the cell connectors (116) are arranged next to each other in an X-direction (122) and/or in a Y-direction (172) of the cell contacting system (100) and are arranged over the cell terminals (115) of the electro-chemical cells (113) that are to be connected to one another in a Z-direction (178) in the assembled state of the cell contacting system (100),
wherein the X-direction (122), the Y-direction (172) and the Z-direction (178) are oriented perpendicularly to each other in pairs,
**characterized in that**
the signal-line-system-side positioning element (168) comprises a contact region (182) by means of which the signal-line-system-side positioning element (168) is fixed to the associated cell connector (116) or current termination (118),
a terminal region (176) by means of which the signal-line-system-side positioning element (168) is fixed to the associated signal line (145), and a deformation region (184) which is arranged between the contact region (182) and the terminal region (176),
wherein the deformation region (184) is deformable in such a way that the contact region (182) of the signal-line-system-side positioning element (168) is movable relative to the terminal region (176) along the Z-direction (178).

14. Method in accordance with Claim 13, **characterized in that** the carrier-element-side positioning element (170) is released from the carrier element (102) and/or from the signal-line-system-side positioning element (168) after the process of fixing the signal-line-system-side positioning element (168) to the cell connector (116) or the current termination (118).

## Revendications

1. Système de contact de cellules pour un dispositif électrochimique (111), qui comporte plusieurs cellules électrochimiques (113) et un système de ligne de courant (104), dans lequel le système de contact de cellules (100) comporte un système de ligne de signal (106) avec une ou plusieurs lignes de signal (145) pour la liaison électroconductrice respectivement d'une source de signal (154) avec un raccord de ligne de signal (144) ou avec un dispositif de surveillance du système de contact de cellules (100) et un élément support (102) qui porte le système de ligne de signal (106),
dans lequel le système de ligne de courant (104) fait partie du système de contact de cellules (100) et l'élément support (102) porte le système de ligne de courant (104),
dans lequel le système de contact de cellules (100) comporte côté système de ligne de signal au moins un élément de positionnement (168) qui est fixé à une ligne de signal (145) du système de ligne de signal (106), et côté élément support au moins un élément de positionnement (170) qui est fixé à l'élément support (102),
dans lequel l'élément de positionnement (168) côté système de ligne de signal est relié à l'élément de positionnement (170) côté élément support de sorte que l'élément de positionnement (168) côté système de ligne de signal soit positionné dans une position souhaitée par rapport à un connecteur de cellule (116) ou un raccord de courant (118) du système de ligne de courant (104),
dans lequel l'élément de positionnement (168) côté système de ligne de signal est fixé au connecteur de cellule (116) ou raccord de courant (118) associé, et dans lequel les connecteurs de cellule (116) sont agencés dans une direction X (122) et/ou dans une direction Y (172) du système de contact de cellules (100) les uns à côté des autres et dans l'état monté du système de contact de cellules (100) dans une direction Z (178) par les bornes de cellule (115) des cellules (113) électrochimiques à relier entre elles,
dans lequel la direction X (122), la direction Y (172) et la direction Z (178) sont orientées par paire perpendiculairement les unes aux autres,
**caractérisé en ce que**
**que** l'élément de positionnement (168) côté système de ligne de signal comporte une zone de contact (182) avec laquelle l'élément de positionnement (168) côté système de ligne de signal est fixé au connecteur de cellule (116) ou raccord de courant (118) associé,
une zone de raccord (176) avec laquelle l'élément de positionnement (168) côté système de ligne de signal est fixé à la ligne de signal associée (145), et
une zone de déformation (184) agencée entre la zone de contact (182) et la zone de raccord (176),
dans lequel la zone de déformation (184) est déformable de telle manière que la zone de contact (182) de l'élément de positionnement (168) côté système de ligne de signal soit mobile par rapport à la zone de raccord (176) le long de la direction Z (178).

2. Système de contact de cellules selon la revendication 1, **caractérisé en ce que** l'élément de positionnement (168) côté système de ligne de signal est fixé par soudage, brasage, sertissage, rivetage et/ou vissage au connecteur de cellule (116) ou raccord de courant (118) associé.

3. Système de contact de cellules selon l'une des revendications 1 ou 2, **caractérisé en ce que** l'élément de positionnement (168) côté système de ligne de signal est fixé par soudage, brasage, sertissage, sertissage par isolation et/ou rivetage à la ligne de signal (145) associée.

4. Système de contact de cellules selon l'une des revendications 1 à 3, **caractérisé en ce que** la ligne de signal (145) comporte plusieurs conducteurs individuels.

5. Système de contact de cellules selon l'une des revendications 1 à 4, **caractérisé en ce que** la ligne de signal (145) associée à l'élément de positionnement (168) côté système de ligne de signal est fixée à une zone de raccord (176), espacée du connecteur de cellule (116) ou raccord de courant (118) associé, de l'élément de positionnement (168) côté système de ligne de signal.

6. Système de contact de cellules selon l'une des revendications 1 à 5, **caractérisé en ce que** la ligne de signal (145) associée à l'élément de positionnement (168) côté système de ligne de signal est fixée à une zone de contact (182), reposant contre le connecteur de cellule (116) ou raccord de courant (118) associé, de l'élément de positionnement (168) côté système de ligne de signal.

7. Système de contact de cellules selon l'une des revendications 1 à 6, **caractérisé en ce que** l'élément de positionnement (170) côté élément support est formé à partir d'un matériau électroisolant.

8. Système de contact de cellules selon l'une des revendications 1 à 7, **caractérisé en ce que** l'élément de positionnement (170) côté élément support est réalisé d'une seule pièce avec l'élément support (102).

9. Système de contact de cellules selon l'une des revendications 1 à 8, **caractérisé en ce que** l'élément de positionnement (168) côté système de ligne de signal est relié à l'élément de positionnement (170) côté élément support par encliquetage, matage et/ou serrage.

10. Système de contact de cellules selon l'une des revendications 1 à 9, **caractérisé en ce qu'**une zone de contact (182) de l'élément de positionnement (168) côté système de ligne de signal, avec lequel l'élément de positionnement (168) côté système de ligne de signal est fixé au connecteur de cellule (116) ou raccord de courant (118) associé, est maintenue de manière mobile le long de la direction Z (178) par rapport à l'élément de positionnement (170) côté élément support au niveau de l'élément de positionnement (170) côté élément support.

11. Système de contact de cellules selon l'une des revendications 1 à 10, **caractérisé en ce que** l'élément de positionnement (170) côté élément support est agencé au niveau d'une section support (326) de l'élément support (102), dans lequel la section support (326) est reliée à un corps de base (328) de l'élément support (102) de telle manière que la section support (326) soit mobile avec l'élément de positionnement (170) côté élément support par rapport au corps de base (328) de l'élément support (102) le long de la direction Z (178).

12. Dispositif électrochimique comprenant plusieurs cellules électrochimiques (113) et un système de contact de cellules (100) selon l'une des revendications 1 à 11.

13. Procédé de fabrication d'un système de contact de cellules (100) pour un dispositif électrochimique (111), qui comporte plusieurs cellules (113) électrochimiques et un système de ligne de courant (104), comprenant ce qui suit :
- la fabrication d'un système de ligne de signal (106) avec une ou plusieurs lignes de signal (145) pour la liaison électroconductrice respectivement d'une source de signal (154) avec un raccord de ligne de signal (144) ou un dispositif de surveillance du système de contact de cellules (100) ;
dans lequel le système de ligne de signal (106) est porté à l'état monté du système de contact de cellules (100) par un élément support (102) du système de contact de cellules (100),
- la fixation d'une ligne de signal (145) du système de ligne de signal (106) à un élément de positionnement (168) côté système de ligne de signal ;
- la liaison de l'élément de positionnement (168) côté système de ligne de signal avec un élément de positionnement (170), qui est côté élément support et qui est fixé à l'élément support (102) de sorte que l'élément de positionnement (168) côté système de ligne de signal soit positionné dans une position souhaitée par rapport à un connecteur de cellule (116) ou un raccord de courant (118) du système de ligne de courant (104) ;
- la fixation de l'élément de positionnement (168) côté système de ligne de signal au connecteur de cellule (116) ou raccord de courant (118) associé ;
dans lequel les connecteurs de cellule (116) sont agencés dans une direction X (122) et/ou dans une direction Y (172) du système de contact de cellules (100) les uns à côté des autres et à l'état monté du système de contact de cellules (100) dans une direction Z (178) par les bornes de cellule (115) des cellules (113) électrochimiques à relier entre elles,
dans lequel la direction X (122), la direction Y (172) et la direction Z (178) sont orientées par paire perpendiculairement les unes aux autres,
**caractérisé en ce que**
l'élément de positionnement (168) côté système de ligne de signal comporte une zone de contact (182), avec laquelle l'élément de positionnement (168) côté système de ligne de signal est fixé au connecteur de cellule (116) ou raccord de courant (118) associé,
une zone de raccord (176), avec laquelle l'élément de positionnement (168) côté système de ligne de signal est fixé à la ligne de signal associée (145), et
une zone de déformation (184) agencée entre la zone de contact (182) et la zone de raccord (176),
dans lequel la zone de déformation (184) est déformable de telle manière que la zone de contact (182) de l'élément de positionnement (168) côté système de ligne de signal soit mobile par rapport à la zone de raccord (176) le long de la direction Z (178).

14. Procédé selon la revendication 13, **caractérisé en ce que** l'élément de positionnement (170) côté élément support après la fixation de l'élément de positionnement (168) côté système de ligne de signal au connecteur de cellule (116) ou au raccord de courant (118) est détaché de l'élément support (102) et/ou de l'élément de positionnement (168) côté système de ligne de signal.
